# EUROPEAN PATENT SPECIFICATION

(11) **EP 2 814 279 B1**
(45) Date of publication and mention of the grant of the patent: **19.07.2017**
(21) Application number: 12880272.5
(22) Date of filing: 24.08.2012
(51) Int. Cl.: H04W 24/02, H04W 24/10

(54) **PCI CONFUSION DETECTION METHOD, USER EQUIPMENT, AND BASE STATION**
VERFAHREN ZUR ERKENNUNG EINER PCI-VERWECHSLUNG SOWIE BENUTZERVORRICHTUNG UND BASISSTATION
PROCÉDÉ DE DÉTECTION DE CONFUSION DE PCI, ÉQUIPEMENT UTILISATEUR ET STATION DE BASE

(43) Date of publication of application: 17.12.2014
(73) Proprietor: Huawei Technologies Co., Ltd., Longgang District Shenzhen, Guangdong 518129 (CN)
(72) Inventor: WANG, Zhen, Shenzhen Guangdong 518129 (CN); SONG, Ping, Shenzhen Guangdong 518129 (CN); ZHANG, Huan, Shenzhen Guangdong 518129 (CN)
(74) Representative: Isarpatent
(86) International application number: PCT/CN2012/080558
(87) International publication number: WO 2014/029107

(56) References cited:
- CN-A- 102 149 149
- CN-A- 102 256 284
- CN-A- 102 395 152
- CN-A- 102 395 152
- CN-K1- 102 395 152
- US-A1- 2010 311 407
- 3GPP: "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP DRAFT; 36300-B20, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 28 June 2012 (2012-06-28), XP050601659, [retrieved on 2012-06-28]
- "3rd Generation Partnership Project; Technical Specification Group Radio Access Network; Automatic Neighbour Relation (ANR) for UTRAN; Stage 2 (Release 10)", 3GPP STANDARD; 3GPP TS 25.484, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V10.1.0, 30 June 2012 (2012-06-30), pages 1-20, XP050581152, [retrieved on 2012-06-30]
- Juan Ramiro ET AL: "Multi-Technology Self-Optimization" In: "Self-Organizing Networks", 28 October 2011 (2011-10-28), John Wiley & Sons, Ltd, Chichester, UK, XP055175659, ISBN: 978-0-47-097352-3 pages 131-206, DOI: 10.1002/9781119954224.ch5, * paragraph [5.10.1] *
- HUANG, DONG. FEMTOCELL NETWORK PIVOTAL TECHNICAL RESEARCH BASED ON LTE. 19 November 2010, XP008173141
- "3rd Generation Partnership Project; Technical Specification Group Radio Access Network; Evolved Universal Terrestrial Radio Access (E-UTRA); Radio Resource Control (RRC); Protocol specification (Release 11)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.0.0, 2 July 2012 (2012-07-02), pages 1-302, XP050581185, [retrieved on 2012-07-02]

## Description

### TECHNICAL FIELD

The present application relates to the field of wireless communications technologies, and in particular to a physical cell identity (Physical Cell ID, PCI) confusion detection method, user equipment, and base station.

### BACKGROUND

A PCI is a physical identity of a long term evolution (Long Term Evolution, LTE) cell. LTE totally has 504 PCIs (0 to 503), and each cell corresponds to a PCI. The PCI is related to signal synchronization and handover, and when the number of LTE cells in a network is large, PCI multiplexing inevitably occurs. If isolation of PCI multiplexing is small, a PCI confusion will occur.

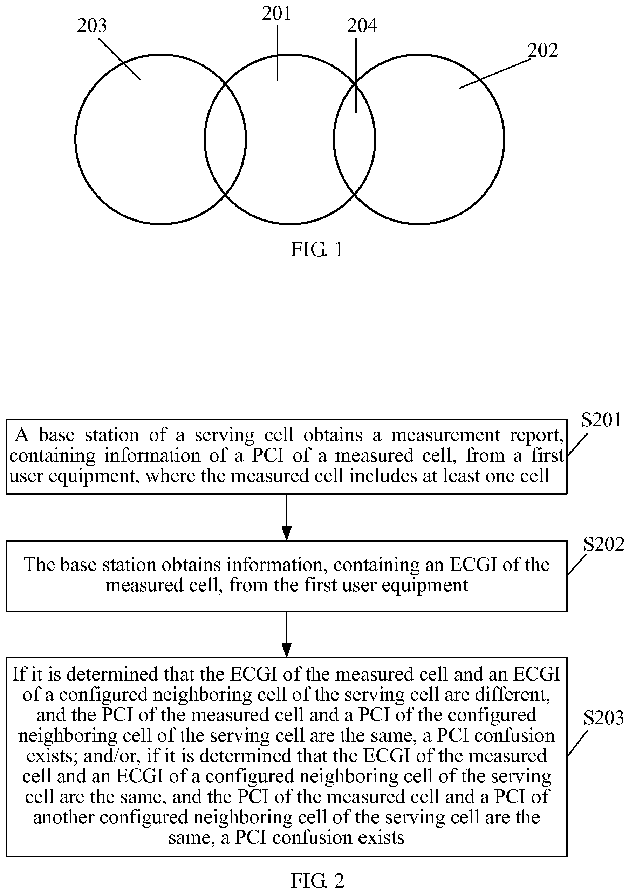

As shown in FIG. 1, if a cell Cell B202 detected by a user equipment and a configured neighboring cell Cell C203 of a serving cell Cell A201 have a same frequency and a same PCI, a PCI confusion occurs. In this case, the PCI confusion has two situations.
Situation 1: If the Cell B202 is a configured neighboring cell of the Cell A201, the user equipment sends the PCI of the Cell B202 to the Cell A201, but the Cell A201 does not know whether the PCI sent by the user equipment is the PCI of the Cell B202 or is the PCI of the Cell C203, so that a handover target cell cannot be determined, and therefore handover is not initiated.
Situation 2: If the Cell B202 is not a configured neighboring cell of the Cell A201, the user equipment sends the PCI of the Cell B202 to the Cell A201, and the Cell A201 believes that the user equipment successfully measures the Cell C203, and initiates handover to the Cell C203. As shown in FIG. 1, if the user equipment is located at a junction 204 of the Cell A201 and the Cell B202, but the area 204 is not covered by the Cell C203, a handover call drop occurs when the user equipment is handed over to the Cell C203.

Document CN 102 395 152 A discloses a method for detecting conflicts or confusions of neighbouring physical cell IDs in LTE networks. Document "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)" discloses an overview and overall description of the E-UTRAN radio interface protocol architecture. Document "3rd Generation Partnership Project; Technical Specification Group Radio Access Network; Automatic Neighbour Relation (ANR) for UTRAN; Stage 2 (Release 10)" discloses a technical specification of the overall support of Automatic Neighbour Relation (ANR) Function in UTRA. Document US 2010 / 311 407 A1 discloses a method for resolving conflicting physical cell identifications in a wireless communication system. Finally, document "Multy-Technology Self-Optimization" by Juan Ramiro et al. discloses self-optimization requirements for 2G, 3G and LTE networks.

### SUMMARY

A main technical problem to be solved by the present application is to provide a physical cell identity PCI confusion detection method, user equipment, and base station, so as to detect a PCI confusion.

This problem is solved by a method with the features of claim 1, and a base station with the features of claim 2.

A first implementation of a first aspect is as follows: The step of obtaining, by a base station of a serving cell, a measurement report, containing information of a PCI of a measured cell, from a first user equipment includes: sending, by the base station, a first measurement configuration message to the first user equipment, where the first measurement configuration message is used to request the first user equipment to perform cell measurement and report a measurement report that is obtained through the measurement and contains information of the PCI of the measured cell; and receiving, by the base station, the measurement report.

A second implementation of the first aspect is as follows: The first measurement configuration message is further used to request the first user equipment to report a measurement report that is obtained through measurement and contains information of PCIs of a predetermined number measured cells; and/or, request the first user equipment to report a measurement report that meets a trigger condition under which the first user equipment reports the measurement report, is obtained through the measurement, and contains the information of the PCI of the measured cell; and/or, request the first user equipment to report a measurement report, which is obtained through the measurement and contains the information of the PCI of the measured cell, according to the predetermined number of reporting times and an interval period.

A third implementation of the first aspect is as follows: Before the step of sending, by the base station, a first measurement configuration message to the first user equipment, the method includes: setting, by the base station, a trigger condition, under which the first user equipment reports the measurement report, corresponding to the first measurement configuration message, and the trigger condition makes the first user equipment send the measurement report of the first measurement configuration message to the base station before handover.

A fourth implementation of the first aspect is as follows: After the step of sending, by the base station, a measurement configuration message to the first user equipment, the method further includes: upon receiving the measurement report sent by the first user equipment, sending, by the base station, a measurement stopping instruction to the first user equipment; or, if no measurement report from the first user equipment is received within a time length of a preset measurement timer, sending a measurement stopping instruction to the user equipment; or, after the base station receives the measurement report sent by the first user equipment, if the number of times that the base station receives the measurement report from the first user equipment reaches the predetermined number of reception times, sending a measurement stopping instruction to the first user equipment.

A fifth implementation of the first aspect is as follows: Before the step of sending, by the base station, a first measurement configuration message to the first user equipment, the method includes: determining, by the base station, according to a preset condition for selecting the first user equipment, whether a user equipment in the serving cell meets the condition, where the condition includes at least one of an energy level of the first user equipment, a state of the first user equipment, the predetermined number of times that the first user equipment participates in PCI confusion detection, and the predetermined number of first user equipments participating in PCI confusion detection; where if the condition is met, the user equipment in the serving cell is the selected first user equipment.

A sixth implementation of the first aspect is as follows: Before the step of sending, by the base station, a first measurement configuration message to the first user equipment, the method includes: determining, by the base station, according to a preset time range condition for performing PCI confusion detection, whether current time meets the time range condition for performing PCI confusion detection, where the time range condition of PCI confusion detection includes at least one of a switch of PCI confusion detection, start time of PCI confusion detection or end time of PCI confusion detection; and if the time range condition for performing PCI confusion detection is met, sending, by the base station, an instruction, where the instruction requests the first measurement configuration message to be sent to the first user equipment.

A seventh implementation of the first aspect is as follows: The step of obtaining, by the base station, information, containing an ECGI of the measured cell, from the first user equipment includes: upon obtaining the measurement report, containing the information of the PCI of the measured cell, from the first user equipment, sending, by the base station, a second measurement configuration message to the first user equipment, where the second measurement configuration message is used to request the first user equipment to report the information containing the ECGI of the measured cell; and receiving, by the base station, the information sent by the first user equipment and containing the ECGI of the measured cell.

An eighth implementation of the first aspect is as follows: Before the step of that if it is determined that the ECGI of the measured cell and an ECGI of a configured neighboring cell of the serving cell are the same, and the PCI of the measured cell and a PCI of another configured neighboring cell of the serving cell are the same, a PCI confusion between the configured neighboring cells of the serving cell exists, the method further includes: updating, by the base station, the PCI of the configured neighboring cell, having the same ECGI as the measured cell, of the serving cell, to update it to be the PCI of the measured cell.

A first implementation of the second aspect is as follows: The step of obtaining, by a first user equipment, a measurement report containing information of a PCI of a measured cell, and sending the measurement report to a base station includes: receiving, by the first user equipment, a first measurement configuration message from the base station, where the first measurement configuration message is used to request the first user equipment to perform cell measurement and report the measurement report that is obtained through the measurement and contains the information of the PCI of the measured cell; upon receiving the first measurement configuration message from the base station, performing, by the first user equipment, measurement on the cell regarding a predetermined measurement parameter; and sending, by the first user equipment, the measurement report that is obtained through the measurement and contains the information of the PCI of the measured cell to the base station.

A second implementation of the second aspect is as follows: The first measurement configuration message is further used to request the first user equipment to report a measurement report that is obtained through measurement and contains information of PCIs of a predetermined number measured cells; and/or, request the first user equipment to report a measurement report that meets a trigger condition under which the first user equipment reports the measurement report, is obtained through the measurement, and contains the information of the PCI of the measured cell; and/or, request the first user equipment to report a measurement report, which is obtained through the measurement and contains the information of the PCI of the measured cell, according to the predetermined number of reporting times and an interval period.

A third implementation of the second aspect is as follows: After the step of upon receiving the first measurement configuration message from the base station, performing, by the first user equipment, measurement on the cell regarding a predetermined measurement parameter, the method includes: if obtained measurement information meets the trigger condition under which the first user equipment reports the measurement report, sending, by the first user equipment, the obtained measurement report to the base station.

A fourth implementation of the second aspect is as follows: After the step of sending, by the first user equipment, the measurement report that is obtained through the measurement and contains the information of the PCI of the measured cell to the base station, the method includes: if the number of reporting times of the measurement report does not reach the predetermined number of reporting times, sending, by the first user equipment, the measurement report to the base station again according to the received interval period that the measurement report is reported, and if the number of reporting times of the measurement report reaches the predetermined number of reporting times, stopping, by the first user equipment, sending the measurement report to the base station.

A fifth implementation of the second aspect is as follows: After the step of sending, by the first user equipment, the measurement report that is obtained through the measurement and contains the information of the PCI of the measured cell to the base station, the method further includes: receiving, by the first user equipment, a measurement stopping instruction from the base station, and stopping the measurement.

A sixth implementation of the second aspect is as follows: The step of obtaining, by the first user equipment, information containing an ECGI of the measured cell, and sending the information containing the ECGI of the measured cell to the base station includes: receiving, by the first user equipment, a second measurement configuration message from the base station, where the second measurement configuration message is used to request the first user equipment to report the information containing the ECGI of the measured cell; and upon receiving the second measurement configuration message of the base station, sending, by the first user equipment, the information that is read from a broadcast of the measured cell and contains the ECGI of the measured cell to the base station.

A first implementation of the third aspect is as follows: The first obtaining module includes a first sending unit and a first receiving unit; the first sending unit is configured to send a first measurement configuration message to the first user equipment, where the first measurement configuration message is used to request the first user equipment to perform cell measurement and report a measurement report that is obtained through the measurement and contains the information of the PCI of the measured cell; and the first receiving unit is configured to, after the first sending unit sends the first measurement configuration message to the first user equipment, receive a measurement report sent by the first user equipment, and send the measurement report containing the information of the PCI of the measured cell to the determination module.

A second implementation of the third aspect is as follows: The first measurement configuration message is further used to request the first user equipment to report a measurement report that is obtained through measurement and contains information of PCIs of a predetermined number measured cells; and/or, request the first user equipment to report a measurement report that meets a trigger condition under which the first user equipment reports the measurement report, is obtained through the measurement, and contains the information of the PCI of the measured cell; and/or, request the first user equipment to report a measurement report, which is obtained through the measurement and contains the information of the PCI of the measured cell, according to the predetermined number of reporting times and an interval period.

A third implementation of the third aspect is as follows: The first obtaining module further includes a setting unit; and the setting unit is configured to set a trigger condition under which the first user equipment corresponding to the first measurement configuration message reports the measurement report and send the set trigger condition, under which the first user equipment reports the measurement report, to the first sending unit, where the trigger condition makes the first user equipment send the measurement report of the first measurement configuration message to the base station before handover.

A fourth implementation of the third aspect is as follows: The first obtaining module further includes a third sending unit, or a fourth sending unit, or a fifth sending unit; the third sending unit is configured to, after the first receiving unit receives the measurement report sent by the first user equipment, send a measurement stopping instruction to the first user equipment; the fourth sending unit is configured to, after the first sending unit sends the first measurement configuration message to the first user equipment and if the measurement report from the first user equipment is not received within a time length of a preset measurement timer, send a measurement stopping instruction to the user equipment; and the fifth sending unit is configured to, after the first receiving unit receives the measurement report sent by the first user equipment and when the number of times that the measurement report from the first user equipment is received reaches the predetermined number of reception times, send a measurement stopping instruction to the first user equipment.

A fifth implementation of the third aspect is as follows: The first obtaining module further includes a first determination unit and a user equipment selecting unit; the first determination unit is configured to determine, according to a preset condition for selecting a first user equipment, whether a user equipment in the serving cell meets the condition, and send a determination result to the user equipment selecting unit, where the condition includes at least one of an energy level of the first user equipment, a state of the first user equipment, the predetermined number of times that the first user equipment participates in PCI confusion detection, and the predetermined number of first user equipments participating in PCI confusion detection; and the user equipment selecting unit is configured to receive the determination result sent by the first determination unit, where when the determination result meets the condition, the user equipment in the serving cell is the selected first user equipment, and send the selected first user equipment to the first sending unit.

A sixth implementation of the third aspect is as follows: The first obtaining module further includes a second determination unit and a sixth sending unit; the second determination unit is configured to determine, according to a preset time range condition for performing PCI confusion detection, whether current time meets the time range condition for performing PCI confusion detection, and send a determination result to the sixth sending unit, where the time range condition of PCI confusion detection includes at least one of a switch of PCI confusion detection, start time of PCI confusion detection or end time of PCI confusion detection; and the sixth sending unit is configured to receive the determination result sent by the second determination unit, and when the determination result meets the time range condition for performing PCI confusion detection, send an instruction for performing PCI confusion detection to the first sending unit.

A seventh implementation of the third aspect is as follows: The second obtaining module includes a second sending unit and a second receiving unit; the second sending unit is configured to, after the first obtaining module obtains the measurement report, which contains the information of the PCI of the measured cell, from the first user equipment, send a second measurement configuration message to the first user equipment, where the second measurement configuration message is used to request the first user equipment to report the information containing the ECGI of the measured cell; and the second receiving unit is configured to, after the second sending unit sends the second measurement configuration message to the first user equipment, receive the information sent by the first user equipment and containing the ECGI of the measured cell, and send the received information containing the ECGI of the measured cell to the determination module.

An eighth implementation of the third aspect is as follows: The base station further includes an updating module; and the updating module is configured to update the PCI of the configured neighboring cell, having the same ECGI as the measured cell, of the serving cell, to update it to be the PCI of the measured cell.

A first implementation of the fourth aspect is as follows: The first obtaining module includes a first receiving unit, a measurement unit, and a first sending unit; the first receiving unit is configured to receive a first measurement configuration message from the base station, and send the received first measurement configuration message to the measurement unit or a related unit, where the first measurement configuration message is used to request a first user equipment to perform cell measurement and report the measurement report that is obtained through the measurement and contains the information of the PCI of the measured cell, and the measured cell includes at least one cell; the measurement unit is configured to, upon receiving the first measurement configuration message sent by the first receiving unit, perform measurement on the cell regarding a predetermined measurement parameter, and send the measurement report that is obtained through the measurement and contains the information of the PCI of the measured cell to the first sending unit or a related unit; and the first sending unit is configured to receive the measurement report sent by the measurement unit and containing the information of the PCI of the measured cell, and send the measurement report that is obtained through the measurement and contains the information of the PCI of the measured cell to the base station.

A second implementation of the fourth aspect is as follows: The first measurement configuration message is used to request the first user equipment to report a measurement report that is obtained through measurement and contains information of PCIs of a predetermined number measured cells; and/or, request the first user equipment to report a measurement report that meets a trigger condition under which the first user equipment reports the measurement report, is obtained through the measurement, and contains the information of the PCI of the measured cell; and/or, request the first user equipment to report a measurement report, which is obtained through the measurement and contains the information of the PCI of the measured cell, according to the predetermined number of reporting times and an interval period.

A third implementation of the fourth aspect is as follows: The first obtaining module further includes a trigger unit; and the trigger unit is configured to receive the first measurement configuration message sent by the first receiving unit and measurement information sent by the measurement unit, and when the measurement information obtained by the measurement unit through the measurement meets the trigger condition under which the first user equipment reports the measurement report, send the obtained measurement report to the first sending unit.

A fourth implementation of the fourth aspect is as follows: The first obtaining module further includes an executing unit; and the executing unit is configured to receive the first measurement configuration message sent by the first receiving unit, and after the first sending unit sends the measurement report that is obtained through the measurement and contains the information of the PCI of the measured cell to the base station, and when the number of reporting times of the measurement report does not reach the predetermined number of reporting times, according to a received interval period that the measurement report is reported, send the measurement report to the base station again, and when the number of reporting times of the measurement report reaches the predetermined number of reporting times, stop sending the measurement report to the base station.

A fifth implementation of the fourth aspect is as follows: The first obtaining module further includes a third receiving unit, and the third receiving unit is configured to, after the first sending unit sends the measurement report that is obtained through the measurement and contains the information of the PCI of the measured cell to the base station, receive a measurement stopping instruction from the base station and stop the measurement.

A sixth implementation of the fourth aspect is as follows: The second obtaining module includes a second receiving unit, a reading unit, and a second sending unit; the second receiving unit is configured to, after the first obtaining module sends the measurement report that is obtained through the measurement and contains the information of the PCI of the measured cell to the base station, receive a second measurement configuration message from the base station, and send the received second measurement configuration message to the reading unit, where the second measurement configuration message is used to request the first user equipment to report the information containing the ECGI of the measured cell; the reading unit is configured to receive the second measurement configuration message sent by the second receiving unit, read the information, containing the ECGI of the measured cell, from a broadcast of the measured cell according to the second measurement configuration message, and send the information containing the ECGI of the measured cell to the second sending unit; and the second sending unit is configured to receive the information sent by the reading unit and containing the ECGI of the measured cell, and send the information containing the ECGI of the measured cell to the base station.

The beneficial effects of the embodiments of the present application are as follows: Different from the prior art, in the embodiments of the present application, a base station requests a user equipment for information including a PCI and an ECGI of a measured cell, and performs confusion detection according to the PCI and the ECGI. Especially, when the ECGI of the measured cell and an ECGI of a configured neighboring cell of a serving cell are different, it indicates that the measured cell is a non-configured neighboring cell of the serving cell, and if in this case the PCI of the measured cell and a PCI of the configured neighboring cell of the serving cell are the same, it indicates that a PCI confusion between the non-configured neighboring cell and the configured neighboring cell of the serving cell exists. Through the foregoing manner, a PCI confusion can be detected.

### BRIEF DESCRIPTION OF DRAWINGS

FIG. 1 is a schematic diagram of principles of a PCI confusion;
FIG. 2 is a flowchart of a physical cell identity PCI confusion detection method according to an embodiment of the present application;
FIG. 3 is a flowchart of a physical cell identity PCI confusion detection method according to another embodiment of the present application;
FIG. 4 is a flowchart of a physical cell identity PCI confusion detection method according to another embodiment of the present application;
FIG. 5 is a flowchart of a physical cell identity PCI confusion detection method according to another embodiment of the present application;
FIG. 6 is a flowchart of a physical cell identity PCI confusion detection method according to another embodiment of the present application;
FIG. 7 is a flowchart of a physical cell identity PCI confusion detection method according to another embodiment of the present application;
FIG. 8 is a schematic structural diagram of a physical cell identity PCI confusion detection system according to an embodiment of the present application;
FIG. 9 is a schematic structural diagram of a physical cell identity PCI confusion detection base station according to an embodiment of the present application;
FIG. 10 is a schematic structural diagram of a physical cell identity PCI confusion detection base station according to another embodiment of the present application;
FIG. 11 is a schematic structural diagram of a physical cell identity PCI confusion detection base station according to another embodiment of the present application;
FIG. 12 is a schematic structural diagram of a physical cell identity PCI confusion detection base station according to another embodiment of the present application; and
FIG. 13 is a schematic structural diagram of a physical cell identity PCI confusion detection user equipment according to an embodiment of the present application.

### DESCRIPTION OF EMBODIMENTS

The present application is illustrated below in detail with reference to the accompanying drawings and embodiments.

Referring to FIG. 2, FIG. 2 is a flowchart of a physical cell identity PCI confusion detection method according to an embodiment of the present application. This embodiment is a flowchart for a base station to perform PCI confusion detection, and the flowchart includes the following steps.
Step S201: A base station of a serving cell obtains a measurement report, containing information of a physical cell identity (Physical Cell ID, PCI) of a measured cell, from a first user equipment, where the measured cell includes at least one cell.
   A serving cell is a cell that provides a service for a user equipment.
   In a broad sense, a base station is a short name of a base station subsystem (BSS, Base Station Subsystem). For example, a global system for mobile communications (GSM, Global System for Mobile Communications) includes a base transceiver station (BTS) and a base station controller (BSC). A base station controller can control one or more dozens of base transceiver stations. In systems such as a wideband code division multiple access (WCDMA, Wideband Code Division Multiple Access) system, similar concepts are called a Node B and a radio network controller (RNC). An Evolved Node B is an evolved Node B, and is the name of a base station in an LTE network, and compared with a Node B in existing 3G, it is integrated with some functions of an RNC, and reduces the number of protocol layers.
   A PCI, physical cell identity, is used to distinguish between signals from different LTE cells. Different cells may be distinguished through center frequencies and PCIs, and the PCI may directly affect scrambling, transmission position, and downlink synchronization for a common channel in a cell.
Step S202: The base station obtains information, containing an E-UTRAN cell global identifier (E-UTRAN cell global identifier, ECGI) of the measured cell, from the first user equipment.
   An ECGI is an LTE cell global identifier. LTE cells with different ECGIs are different LTE cells, and two LTE cells having same ECGIs are actually the same LTE cell.
Step S203: If it is determined that the ECGI of the measured cell and an ECGI of a configured neighboring cell of the serving cell are different, and the PCI of the measured cell and a PCI of the configured neighboring cell of the serving cell are the same, a PCI confusion between a non-configured neighboring cell and the configured neighboring cell of the serving cell exists; and/or, if it is determined that the ECGI of the measured cell and an ECGI of a configured neighboring cell of the serving cell are the same, and the PCI of the measured cell and a PCI of another configured neighboring cell of the serving cell are the same, a PCI confusion between the configured neighboring cells of the serving cell exists.

For principles of a PCI confusion, reference may be made to FIG. 1. If the ECGI of the measured cell and the ECGI of the configured neighboring cell of the serving cell are different, it indicates that the measured cell is a non-configured neighboring cell of the serving cell It can be detected whether a PCI confusion between the non-configured neighboring cell and the configured neighboring cell of the serving cell exists by determining whether the PCI of the measured cell and the PCI of the configured neighboring cell of the serving cell are the same; if the PCI of the measured cell and the PCI of the configured neighboring cell of the serving cell are the same, it indicates that a PCI confusion between the non-configured neighboring cell and the configured neighboring cell of the serving cell exists.

If the ECGI of the measured cell and the ECGI of the configured neighboring cell of the serving cell are the same, it indicates that the measured cell is a configured neighboring cell among configured neighboring cells of the serving cell; if the ECGI of the measured cell and the ECGI of the configured neighboring cell of the serving cell are the same, and the PCI of measured cell and the PCI of another configured neighboring cell of the serving cell are the same, it indicates that a PCI confusion between the configured neighboring cells of the serving cell exists.

When it is detected that the PCI confusion between the non-configured neighboring cell and the configured neighboring cell of the serving cell exists and/or the PCI confusion between the configured neighboring cells of the serving cell exists, the confusion may be reported to a network administrator, so that the network administrator may perform adjustment and arrangement.

In the embodiment of the present application, after the base station obtains the ECGI and the PCI, it can be determined, through the ECGI and the PCI, whether a PCI confusion exists; particularly, when the ECGI of the measured cell and the ECGI of the configured neighboring cell of the serving cell are different, it indicates that the measured cell is a non-configured neighboring cell of the serving cell, and if in this case the PCI of the measured cell and the PCI of the configured neighboring cell of the serving cell are the same, it indicates that the PCI confusion between the non-configured neighboring cell and the configured neighboring cell of the serving cell exists, and is a PCI confusion between the measured cell of the "non-configured neighboring cell" and the "configured neighboring cell" of the serving cell. Through the foregoing manner, the PCI confusion can be detected, and the PCI confusion between a "non-configured neighboring cell" and a "configured neighboring cell" can be detected.

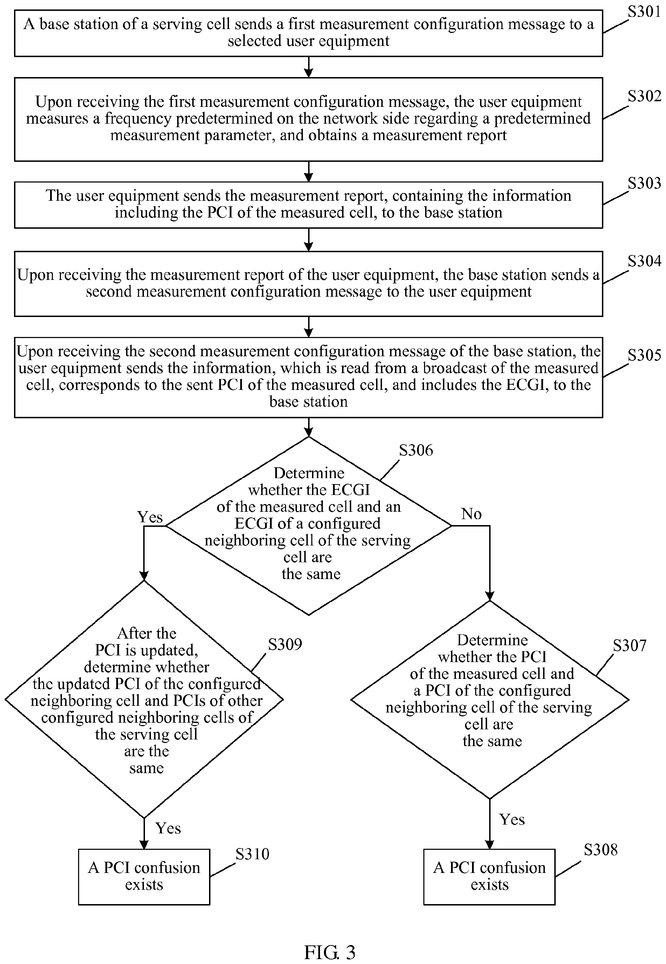

Referring to FIG. 3, FIG. 3 is a flowchart of a physical cell identity PCI confusion detection method according to another embodiment of the present application. This embodiment is a flowchart of PCI confusion detection involving a base station and a user equipment, and the flowchart includes the following steps.
Step S301: A base station of a serving cell sends a first measurement configuration message to a first user equipment, where the first measurement configuration message is used to request the first user equipment to perform cell measurement and report a measurement report that is obtained through the measurement and contains information of a PCI of a measured cell, and the measured cell includes at least one cell.
   To perform cell measurement is to measure a frequency predetermined on a network side and report a measurement report including information including a PCI of a measured cell.
   In an LTE network, when a user equipment performs measurement, the measurement is always performed according to a frequency. For example, a frequency f is in the network, and the user equipment measures all cells of the frequency f in the network.
   The network side mainly refers to a radio network controller (RNC) and a core network (CN), is also called a C side, and mainly refers to some packet domain core networks.
   The base station of the serving cell sends the first measurement configuration message to the first user equipment, to request the first user equipment to measure the frequency predetermined on the network side and report the measurement report that includes information including the PCI of the measured cell, and the measured cell includes at least one cell.
   A PCI, physical cell identity, is used to distinguish between signals from different LTE cells, different cells may be distinguished through center frequencies and PCIs, and the PCI may directly affect scrambling, transmission position, and downlink synchronization for a common channel in a cell.
Step S302: Upon receiving the first measurement configuration message, the first user equipment performs measurement on the cell, that is, measures the frequency predetermined on the network side regarding a predetermined measurement parameter, and obtains a measurement report.
   For example, the frequency f is in the network, the first user equipment measures all cells of the frequency f in the network to perform the measurement regarding the predetermined measurement parameter in the first measurement configuration message.
Step S303: The first user equipment sends the measurement report, which is obtained through the measurement and contains the information including the PCI of the measured cell, to the base station.
   Upon obtaining the measurement report, the first user equipment sends the measurement report, which contains the information including the PCI of the measured cell, to the base station.
Step S304: Upon receiving the measurement report of the first user equipment, the base station sends a second measurement configuration message to the first user equipment, where the second measurement configuration message is used to request the first user equipment to report information, including an ECGI, of the measured cell corresponding to the received PCI.
   Upon receiving the measurement report of the first user equipment, the base station sends the second measurement configuration message to the first user equipment, to request the first user equipment to report the information, including the ECGI, of the measured cell corresponding to the received PCI. An ECGI is an LTE cell global identifier, LTE cells with different ECGIs are different LTE cells, and two LTE cells having same ECGIs are actually the same LTE cell.
Step S305: Upon receiving the second measurement configuration message of the base station, the first user equipment sends the information, which is read from a broadcast of the measured cell, corresponds to the sent PCI of the measured cell, and includes the ECGI, to the base station.
   Upon receiving the second measurement configuration message of the base station, the first user equipment reads the information, containing the ECGI of the measured cell, from the broadcast of the measured cell, and sends the information, which corresponds to the sent PCI of the measured cell and includes the ECGI, to the base station.
Step S306: Upon receiving the information, including the ECGI, of the measured cell of the first user equipment, the base station determines, according to the received measurement report including the PCI of the measured cell and the ECGI of the measured cell, whether the ECGI of the measured cell and an ECGI of a configured neighboring cell of the serving cell are the same; if the ECGI of the measured cell and the ECGI of the configured neighboring cell of the serving cell are different, go to step S307, and if the ECGI of the measured cell and the ECGI of the configured neighboring cell of the serving cell are the same, go to step S309.
   Upon receiving the information, including the ECGI, of the measured cell, the base station may determine, according to the received measurement report including the PCI of the measured cell and the ECGI of the measured cell, whether the ECGI of the measured cell and the ECGI of the configured neighboring cell of the serving cell are the same.
   Neighboring cells refer to two cells having overlapping signal coverage and set to have a handover relationship, and a cell may have multiple neighboring cells. Simply put, when a user equipment is in a moving state, smooth alternating of services may be performed between multiple cells having a defined neighboring cell relationship, and no interruption occurs. A user equipment can be handed over between different cells only when a neighboring cell is added.
Step S307: If the ECGI of the measured cell and the ECGI of the configured neighboring cell of the serving cell are different, determine whether the PCI of the measured cell and a PCI of the configured neighboring cell of the serving cell are the same.
   If the ECGI of the measured cell and the ECGI of the configured neighboring cell of the serving cell are different, it indicates that the measured cell is a non-configured neighboring cell of the serving cell, and it is determined whether the PCI of the measured cell and the PCI of the configured neighboring cell of the serving cell are the same, so as to detect whether a PCI confusion between the non-configured neighboring cell and the configured neighboring cell of the serving cell exists.
Step S308: If the PCI of the measured cell and the PCI of the configured neighboring cell of the serving cell are the same, determine that a PCI confusion between the non-configured neighboring cell and the configured neighboring cell of the serving cell exists.
   If the PCI of the measured cell and the PCI of the configured neighboring cell of the serving cell are the same, it indicates that the PCI confusion between the non-configured neighboring cell and the configured neighboring cell of the serving cell exists.
Step S309: If the ECGI of the measured cell and the ECGI of the configured neighboring cell of the serving cell are the same, the base station updates the PCI of the configured neighboring cell having the same ECGI as the measured cell, to update it to be the received PCI of the measured cell, where the received PCI of the measured cell and the ECGI of the configured neighboring cell of the serving cell are the same, and determines whether the updated PCI of the configured neighboring cell and PCIs of other configured neighboring cells of the serving cell are the same.
   If the ECGI of the measured cell and the ECGI of the configured neighboring cell of the serving cell are the same, it indicates that the measured cell is one configured neighboring cell among configured neighboring cells of the serving cell, and the PCI corresponding to the configured neighboring cell of the serving cell is changed, but information of the configured neighboring cell stored in the base station of the serving cell is still old information, and the base station of the serving cell updates the PCI of the configured neighboring cell having the same ECGI as the measured cell, to update it to be the received PCI of the measured cell, where the received PCI of the measured cell and the ECGI of the configured neighboring cell of the serving cell are the same, then determines whether the updated PCI of the configured neighboring cell and PCIs of other configured neighboring cells of the serving cell are the same, and detects whether a PCI confusion between the configured neighboring cells of the serving cell exists.
Step S310: If the updated PCI of the configured neighboring cell and the PCI of another configured neighboring cell of the serving cell are the same, determine that a PCI confusion between the configured neighboring cells of the serving cell exists.

If the updated PCI of the configured neighboring cell and the PCI of another configured neighboring cell of the serving cell are the same, it indicates that the PCI confusion between the configured neighboring cells of the serving cell exists.

When it is detected that the PCI confusion between the non-configured neighboring cell and the configured neighboring cell of the serving cell exists and/or the PCI confusion between the configured neighboring cells of the serving cell exists, the confusion may be reported to a network administrator, so that the network administrator may perform adjustment and arrangement.

In the embodiment of the present application, the base station directly requests the first user equipment to provide successively the information including the PCI of the measured cell and the information including the ECGI of the measured cell; after the base station obtains the ECGI and the PCI, when the ECGI of the measured cell and the ECGI of the configured neighboring cell of the serving cell are different, it indicates that the measured cell is a non-configured neighboring cell of the serving cell, and if in this case the PCI of the measured cell and the PCI of the configured neighboring cell of the serving cell are the same, it indicates that a PCI confusion between the non-configured neighboring cell and the configured neighboring cell of the serving cell exists, and is a PCI confusion between the measured cell of the "non-configured neighboring cell" and the "configured neighboring cell" of the serving cell. Through the foregoing manner, the PCI confusion can be detected, and the PCI confusion between a "non-configured neighboring cell" and a "configured neighboring cell" can be detected.

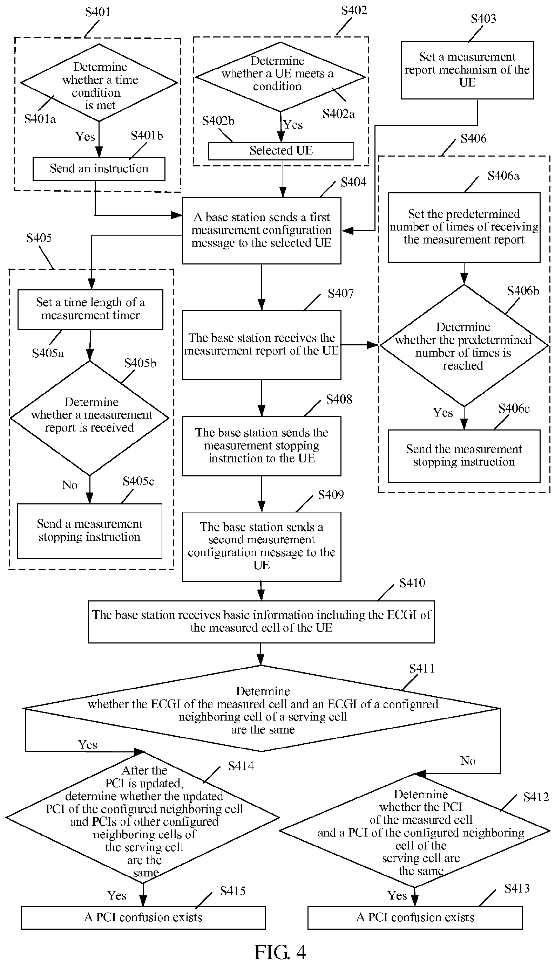

Referring to FIG. 4, FIG. 4 is a flowchart of a physical cell identity PCI confusion detection method according to another embodiment of the present application. This embodiment is a flowchart for a base station to perform PCI confusion detection, and the flowchart includes the following steps.

A first process: A base station of a serving cell obtains a measurement report, containing information of a PCI of a measured cell, from a first user equipment, where the measured cell includes at least one cell. The process includes the following steps.
Step S401 includes step S401a and step S401b, as described in detail below.
Step S401a: A base station determines, according to a preset time range condition for performing PCI confusion detection, whether current time meets the time range condition for performing PCI confusion detection, where the time range condition of PCI confusion detection includes at least one of a switch of PCI confusion detection, start time of PCI confusion detection or end time of PCI confusion detection.
   For example: 1) Only when the "switch of PCI confusion detection" is on, and it is between the start time of PCI confusion detection and the end time of PCI confusion detection, the base station performs step S401b; 2) if the "switch of PCI confusion detection" is off, or it reaches the end time of PCI confusion detection, the base station ends PCI confusion detection and stops corresponding measurement; 3) if the "switch of PCI confusion detection" is on, the base station performs PCI confusion detection everyday during the period from the start time of PCI confusion detection to the end time of PCI confusion detection, that is, automatically perform PCI confusion detection in the unit of a day, and go to step S401b; 4) only one or two of the three parameters, namely, the switch of PCI confusion detection, the start time of PCI confusion detection and the end time of PCI confusion detection, are set. In short, the three parameters may be set to the granularity of base station, so as to limit operating time and an operating range of PCI confusion detection.
Step S401b: If it meets the time range condition for performing PCI confusion detection, a base station of a serving cell sends an instruction, where the instruction requests a first measurement configuration message to be sent to the first user equipment which is selected. If it meets the time range condition for performing PCI confusion detection, go to step S404.
   When the first user equipment performs neighboring cell measurement and reading of an ECGI, air interface resources are consumed. Therefore, through a detection switch and time period control, the impact of PCI confusion detection on a network can be reduced.
   It should be noted that step S401 controls the time range of PCI confusion detection, but in an actual application, the step may be omitted, and step S404 is directly entered.
Step S402 includes step S402a and step S402b, as described in detail below.
Step S402a: The base station determines, according to a preset condition for selecting a first user equipment, whether the first user equipment in the serving cell meets the condition, where the preset condition for selecting a first user equipment includes at least one of an energy level of the first user equipment, a state of the first user equipment, the predetermined number of times that the first user equipment participates in PCI confusion detection, and the predetermined number of first user equipments participating in PCI confusion detection.
   For example: when selection is performed through the energy level of the first user equipment, a user equipment supporting ECGI measurement may be selected; when selection is performed through the state of the first user equipment, selection may be performed among a new accessing user equipment or a new calling user equipment, an accessing user equipment by non-handover or an accessing user equipment by non-radio resource control (radio resource control, RRC) reestablishment, and so on; selection is performed through the preset number of first user equipments participating in measurement of PCI confusion detection; or, the number of times that each selected first user equipment participates in PCI confusion detection is preset. Definitely, the foregoing four items may also be combined to select a first user equipment.
Step S402b: If the condition is met, the user equipment in the serving cell is the selected first user equipment. Step S402b ends, and step S404 is entered.
   When the first user equipment performs neighboring cell measurement and reading of an ECGI, air interface resources are consumed, and when the base station processes and manages measurement information, the base station also occupies resources of the base station. Therefore, targeted selection of a user equipment performing PCI confusion detection may reduce occupation of resources by the PCI confusion detection and an impact on a network.
   It should be noted that step S402 performs targeted selection of the first user equipment performing PCI confusion detection, which limits the number of first user equipments participating in measurement, and when the first user equipment is not required to be selected specially, step S404 can be directly entered.
Step S403: The base station sets a measurement report mechanism of the first user equipment. Step S403 specifically includes: setting, by the base station, a trigger condition under which the first user equipment corresponding to the first measurement configuration message reports a measurement report, where the trigger condition makes the first user equipment send the measurement report of the first measurement configuration message to the base station before handover, so that a PCI confusion is found and solved before the handover, such as, reduction of A3Offset, A4Threshold, and so on. Step S403 ends, and step S404 is entered. When the trigger condition, under which the first user equipment reports the measurement report, is not required to be set, directly go to step S404.
   Further, step S403 further includes: setting, by the base station, the predetermined number of reporting times that the first user equipment corresponding to the first measurement configuration message reports the measurement report and an interval period that the first user equipment reports the measurement report.
   The predetermined number of reporting times that the first user equipment reports the measurement report and the interval period that the first user equipment reports the measurement report control the action that the first user equipment reports the measurement report, and by setting the predetermined number of reporting times that the first user equipment reports the measurement report and the interval period that the user equipment reports the measurement report, resource consumption by the first user equipment and the base station can be reduced.
   It should be noted that no sequential relationship exists between step S401, step S402 and step S403, and in an actual application, an operation may be performed by selecting one, two, or more steps from step S401, step S402 and step S403 according to requirements of the actual application.
Step S404: The base station of the serving cell sends the first measurement configuration message to the selected first user equipment, where the first measurement configuration message is used to request the user equipment to perform cell measurement and report a measurement report that is obtained through the measurement and contains information of a PCI of a measured cell, and the measured cell includes at least one cell.

To perform cell measurement is to measure a frequency predetermined on a network side and report a measurement report including information including a PCI of a measured cell.

The base station of the serving cell sends the first measurement configuration message to the selected first user equipment, to request the user equipment to measure the frequency predetermined on the network side and report the measurement report that includes information including the PCI of the measured cell.

A serving cell is a cell that provides a service for a user equipment. In an LTE network, when a user equipment performs measurement, the measurement is always performed according to a frequency. For example, if a frequency f is in the network, and the user equipment measures all cells of the frequency f in the network.

Step S404 is specifically as follows: The base station of the serving cell sends the first measurement configuration message to the selected first user equipment, where the first measurement configuration message is used to request the first user equipment to measure the frequency predetermined on the network side and report the measurement report that includes information including PCIs of a predetermined number of measured cells.

This step limits the number of the measured cells in the first measurement configuration message, because the first user equipment consumes resources when performing measurement, and the base station also consumes resources. The number of the measured cells is limited, so as to reduce consumption of resources. For example, the predetermined number of the measured cells is set to 1, and the user equipment is only required to report an optimal neighboring cell, that is, a measured cell most likely to undergo a PCI confusion.

Further, step S404 is specifically as follows: The base station of the serving cell sends the first measurement configuration message to the selected first user equipment, where the first measurement configuration message is used to request the first user equipment to measure the frequency predetermined on the network side and report the measurement report that includes information including the PCI of the measured cell and the trigger condition under which the user equipment reports the measurement report.

After the base station sets the trigger condition under which the first user equipment reports the measurement report, the first measurement configuration message sent to the selected first user equipment includes the trigger condition under which the first user equipment reports the measurement report, and through the manner, the PCI confusion can be found and solved before handover, so as to ensure normal handover in a network.

Further, step S404 is specifically as follows: The base station of the serving cell sends the first measurement configuration message to the selected first user equipment, where the first measurement configuration message used for requesting the first user equipment to measure the frequency predetermined on the network side and report a message that includes the measurement report that includes information including the PCI of the measured cell, the trigger condition under which the first user equipment reports the measurement report, and the predetermined number of reporting times that the first user equipment reports the measurement report and the interval period that the first user equipment reports the measurement report.

The predetermined number of reporting times that the first user equipment reports the measurement report and the interval period that the first user equipment reports the measurement report control the action that the first user equipment reports the measurement report, and by setting the predetermined number of reporting times that the first user equipment reports the measurement report and the interval period that the first user equipment reports the measurement report, resource consumption by the first user equipment and the base station can be reduced.
Step S405 includes step S405a, S405b and step S405c, as described in detail below.
Step S405a: The base station sets a time length of a measurement timer.
Step S405b: Determine whether the measurement report from the first user equipment is received within the time length of the measurement timer.
Step S405c: If the measurement report from the first user equipment is not received, send a measurement stopping instruction to the first user equipment.
   Because the first user equipment consumes resources when performing measurement, and the base station also consumes resources, if the first user equipment does not report a corresponding measurement report within a certain period of time, the first user equipment is made to stop corresponding measurement, and through this manner, consumption of resources can be reduced.
   Step S405 controls the measurement action of the first user equipment, and in an actual application, when step S405 does not exit, directly go to step S407.
Step S406 includes step S406a, S406b and step S406c, as described in detail below.
Step S406a: The base station sets the number of times of receiving the measurement report from the first user equipment as the predetermined number of reception times.
Step S406b: Determine whether the number of times of receiving the measurement report from the first user equipment reaches the predetermined number of reception times.
Step S406c: If the predetermined number of reception times is reached, send the measurement stopping instruction to the first user equipment.
Step S406 controls the measurement action of the first user equipment. Step S406a may be performed before step S407, and may also be performed after step S407. Step S406b and step S406c are performed after step S407. In an actual application, if step S406 does not exist, directly go to step S407.
   The first user equipment consumes resources when performing measurement, and the base station also consumes resources. If the number of times of reporting the measurement report is preset, for example, if a signal of the measured cell meets the trigger condition under which the first user equipment reports the measurement report, the measurement report is changed into that measurement and reporting are performed once periodically, and through this manner, consumption of resources can be reduced.
   It should be noted that in an actual application, one of the two steps, namely step S405 and step S406, may be selected to be performed, or the two steps may both be performed. In both step S405 and step S406, the base station controls the measurement action of the first user equipment, so as to reduce waste of resources.
Step S407: After sending the first measurement configuration message to the first user equipment, the base station receives the measurement report from the first user equipment, where the measurement report includes the information of the PCI of the measured cell.
   After the base station sends the first measurement configuration message to the first user equipment, if the first user equipment sends the measurement report to the base station, the base station receives the measurement report from the first user equipment, where the measurement report includes the information of the PCI of the measured cell.
Step S408: Upon receiving the measurement report from the first user equipment, the base station sends a measurement stopping instruction to the first user equipment.
Step S408 is specifically as follows: Upon receiving the measurement report from the first user equipment, the base station deletes a measurement identifier corresponding to the measurement report, and sends an instruction for stopping the measurement corresponding to the measurement identifier to the first user equipment.
   Through step S408, consumption and waste of resources can be reduced.
   A second process: The base station obtains information including an ECGI of the measured cell from the first user equipment. The process includes the following steps.
Step S409: Upon receiving the measurement report from the first user equipment, the base station sends a second measurement configuration message to the first user equipment, where the second measurement configuration message is used to request the first user equipment to report information that corresponds to the received PCI of the measured cell and includes an ECGI.
   An ECGI is an LTE cell global identifier, LTE cells with different ECGIs are different LTE cells, and two LTE cells having same ECGIs are actually the same LTE cell.
Step S410: After sending the second measurement configuration message to the first user equipment, the base station receives the information, including the ECGI of the measured cell, from the first user equipment.
   A third process: If it is determined that the ECGI of the measured cell and an ECGI of a configured neighboring cell of the serving cell are different, and the PCI of the measured cell and a PCI of the configured neighboring cell of the serving cell are the same, a PCI confusion between a non-configured neighboring cell and the configured neighboring cell of the serving cell exists; or, if it is determined that the ECGI of the measured cell and an ECGI of a configured neighboring cell of the serving cell are the same, and the PCI of the measured cell and a PCI of another configured neighboring cell of the serving cell are the same, a PCI confusion between the configured neighboring cells of the serving cell exists; and the process includes the following steps.
Step S411: The base station determines, according to the received measurement report including the PCI of the measured cell and the ECGI of the measured cell, whether the ECGI of the measured cell and an ECGI of a configured neighboring cell of the serving cell are the same; if the ECGI of the measured cell and the ECGI of the configured neighboring cell of the serving cell are different, go to step S412, and if the ECGI of the measured cell and the ECGI of the configured neighboring cell of the serving cell are the same, go to step S414.
Step S412: If the ECGI of the measured cell and the ECGI of the configured neighboring cell of the serving cell are different, determine whether the PCI of the measured cell and a PCI of the configured neighboring cell of the serving cell are the same.
Step S413: If the PCI of the measured cell and the PCI of the configured neighboring cell of the serving cell are the same, a PCI confusion between the non-configured neighboring cell and the configured neighboring cell of the serving cell exists.
Step S414: If the ECGI of the measured cell and the ECGI of the configured neighboring cell of the serving cell are the same, the base station updates the PCI of the configured neighboring cell having the same ECGI as the measured cell, to update it to be the received PCI of the measured cell, where the received PCI of the measured cell and the ECGI of the configured neighboring cell of the serving cell are the same, and determines whether the updated PCI of the configured neighboring cell and PCIs of other configured neighboring cells of the serving cell are the same.
Step S415: If the updated PCI of the configured neighboring cell and the PCI of another configured neighboring cell of the serving cell are the same, a PCI confusion between the configured neighboring cells of the serving cell exists.

When it is detected that the PCI confusion between the non-configured neighboring cell and the configured neighboring cell of the serving cell exists and/or the PCI confusion between the configured neighboring cells of the serving cell exists, the confusion may be reported to a network administrator, so that the network administrator may perform adjustment and arrangement.

In short, in the embodiment of the present application, the base station directly requests the first user equipment to provide successively the information including the PCI of the measured cell and the information including the ECGI of the measured cell; after the base station obtains the ECGI and the PCI, when the ECGI of the measured cell and the ECGI of the configured neighboring cell of the serving cell are different, it indicates that the measured cell is a non-configured neighboring cell of the serving cell, and if in this case the PCI of the measured cell and the PCI of the configured neighboring cell of the serving cell are the same, it indicates that a PCI confusion between the non-configured neighboring cell and the configured neighboring cell of the serving cell exists. Through the foregoing manner, the PCI confusion can be detected, and the PCI confusion between a "non-configured neighboring cell" and a "configured neighboring cell" can be detected.

Further, through a detection switch and time period control, the impact of PCI confusion detection on a network can be reduced; targeted selection of a user equipment performing PCI confusion detection may reduce occupation of resources by the PCI confusion detection and an impact on the network; by setting the trigger condition under which the user equipment corresponding to the first measurement configuration message used for the PCI confusion detection reports the measurement report, the PCI confusion can be found and solved before handover; the measurement action of the user equipment is controlled, so as to reduce waste of resources.

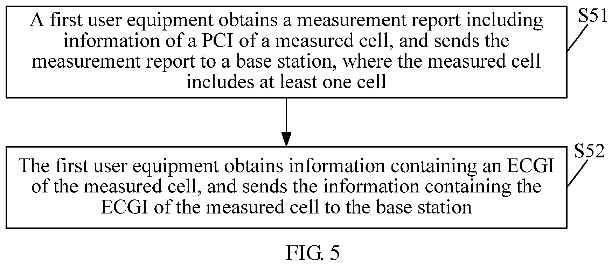

Referring to FIG. 5, FIG. 5 is a flowchart of a physical cell identity PCI confusion detection method according to another embodiment of the present application. This embodiment is mainly a flowchart for a first user equipment, and the flowchart includes the following steps.
Step S51: A first user equipment obtains a measurement report including information of a PCI of a measured cell, and sends the measurement report to a base station, where the measured cell includes at least one cell.
   The first user equipment obtains the measurement report including the information of the PCI of the measured cell through measurement, and sends the obtained measurement report to the base station, where the measured cell includes at least one cell.
Step S52: The first user equipment obtains information containing an ECGI of the measured cell, and sends the information containing the ECGI of the measured cell to the base station.

After the measurement report including the information of the PCI of the measured cell is sent to the base station, the information containing the ECGI of the measured cell can be obtained from a broadcast, and then the information containing the ECGI of the measured cell is sent to the base station.

In the embodiment of the present application, the user equipment sends successively the information including the PCI of the measured cell and the information including the ECGI of the measured cell to the base station, and after the base station obtains the ECGI and the PCI, it can determined whether a PCI confusion exists. Through the foregoing manner, a PCI confusion can be detected. When it is detected that the PCI confusion between the non-configured neighboring cell and the configured neighboring cell of the serving cell exists and/or the PCI confusion between the configured neighboring cells of the serving cell exists, the confusion may be reported to a network administrator, so that the network administrator may perform adjustment and arrangement.

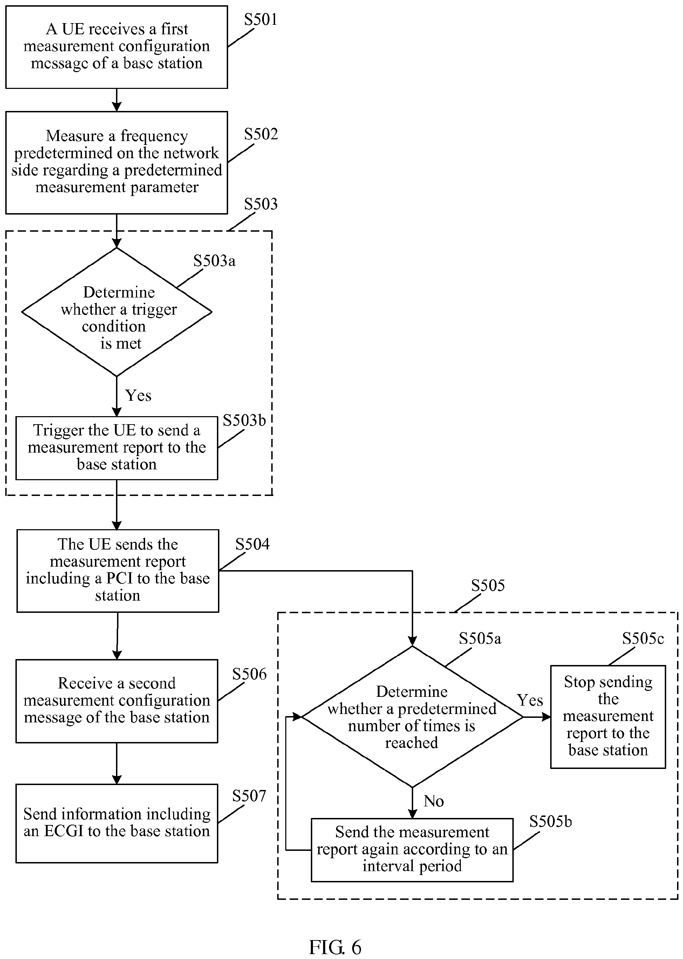

Referring to FIG. 6, FIG. 6 is a flowchart of a physical cell identity PCI confusion detection method according to another embodiment of the present application. This embodiment is mainly a flowchart for a first user equipment, and the flowchart includes the following steps.

A first process: A first user equipment obtains a measurement report including information of a PCI of a measured cell, and sends the measurement report to a base station, where the measured cell includes at least one cell; the process includes the following steps.
Step S501: A first user equipment receives a first measurement configuration message from a base station, where the first measurement configuration message is used to request the first user equipment to perform cell measurement and report a measurement report that is obtained through the measurement and contains information of a PCI of a measured cell, and the measured cell includes at least one cell.
   To perform cell measurement is to measure a frequency predetermined on a network side and report a measurement report including information including a PCI of a measured cell.
   Step S501 specifically includes as follows: The first user equipment receives the first measurement configuration message from the base station, where the first measurement configuration message requests the user equipment to measure the frequency predetermined on the network side and report the measurement report that includes information including the PCI of the measured cell and a trigger condition under which the user equipment reports the measurement report.
   Further, step S501 specifically includes as follows: The first user equipment receives the first measurement configuration message from the base station, where the first measurement configuration message used for requesting the first user equipment to measure the frequency predetermined on the network side and report a message that includes the measurement report that includes information including the PCI of the measured cell, the trigger condition under which the first user equipment reports the measurement report or the predetermined number of reporting times that the first user equipment reports the measurement report and an interval period that the first user equipment reports the measurement report. The first measurement configuration message is used to request the first user equipment to perform cell measurement and report the measurement report that is obtained through measurement and contains information of PCIs of a predetermined number of measured cells.
Step S502: Upon receiving the first measurement configuration message from the base station, the first user equipment measures the frequency predetermined on the network side regarding a predetermined measurement parameter; if a measurement report is obtained, go to step S504; if no measurement report is obtained during the measurement, and the base station sends a measurement stopping instruction to the first user equipment, the first user equipment receives the measurement stopping instruction from the base station and stops the measurement.
   If a frequency f is in the network, the user equipment measures all cells of the frequency f in the network to perform the measurement regarding the predetermined measurement parameter in the first measurement configuration message.
   When the first measurement configuration message in step S501 includes a trigger condition under which the first user equipment reports the measurement report, the first user equipment needs to execute step S503; if the first measurement configuration message does not include the trigger condition under which the first user equipment reports the measurement report, the first user equipment does not need to execute S503.
Step S503 includes step S503a and step S503b, as described in detail below.
Step S503a: The first user equipment determines, according to the received trigger condition under which the first user equipment reports the measurement report, whether obtained measurement information meets the trigger condition under which the first user equipment reports the measurement report.
Step S503b: If the trigger condition under which the first user equipment reports the measurement report is met, the first user equipment sends the obtained measurement report to the base station.
   Step S503b may specifically be as follows: If the trigger condition under which the first user equipment reports the measurement report is met, the first user equipment sends an internal instruction, and the instruction requests the first user equipment to send the obtained measurement report to the base station.
   When the measurement information does not meet the trigger condition under which the first user equipment reports the measurement report, the first user equipment performs measurement continuously, and during the measurement, if the base station sends a measurement stopping instruction to the first user equipment, the first user equipment receives the measurement stopping instruction from the base station and stops the measurement. During the measurement, if the measurement information meets the trigger condition under which the first user equipment reports the measurement report, go to step S504.
Step S504: The first user equipment sends the measurement report, which includes the information including the PCI of the measured cell, to the base station.
   If the first measurement configuration message in step S501 includes the trigger condition under which the first user equipment reports the measurement report, the predetermined number of reporting times that the first user equipment reports the measurement report and an interval period that the first user equipment reports the measurement report, the user equipment further needs to execute step S505 in addition to executing step S503; if the first measurement configuration message does not include the predetermined number of reporting times that the first user equipment reports the measurement report or the interval period that the first user equipment reports the measurement report, the user equipment does not need to execute step S505, and step S506 is directly entered.
Step S505 includes step S505a, S505b and step S505c, as described in detail below.
Step S505a: The first user equipment determines, according to the received predetermined number of reporting times that the first user equipment reports the measurement report, whether the number of reporting times of the measurement report reaches the predetermined number of reporting times.
Step S505b: If the number of reporting times of the measurement report does not reach the predetermined number of reporting times, the first user equipment, according to the received interval period that the first user equipment reports the measurement report, sends the measurement report to the base station again, and step S505a is returned to.
Step S505c: If the number of reporting times of the measurement report reaches the predetermined number of reporting times, the first user equipment stops sending the measurement report to the base station.
   For example, if the measurement information meets the trigger condition under which the first user equipment reports the measurement report, the measurement report reporting event is changed into measurement reporting performed once periodically, and when the predetermined number of reporting times is reached, the reporting is stopped.
   The predetermined number of reporting times that the first user equipment reports the measurement report and the interval period that the first user equipment reports the measurement report control the action of that the first user equipment reports the measurement report, so as to reduce resource consumption by the first user equipment and the base station.
   A second process: The first user equipment obtains information containing an ECGI of the measured cell, and sends the information containing the ECGI of the measured cell to the base station. The process includes the following steps.
Step S506: After sending the measurement report that includes the information including the PCI of the measured cell to the base station, the first user equipment receives a second measurement configuration message from the base station, where the second measurement configuration message is a message for requesting the first user equipment to report the information corresponding to the sent PCI of the measured cell and including the ECGI; go to step S507.
   It should be noted that no obvious sequential relationship exists between step S505 and step S506; generally, after step S504, the first user equipment executes step S505; execution of step S506 depends on whether the base station sends the second measurement configuration message to the first user equipment.
   In the process following step S504, if the base station sends a measurement stopping instruction to the first user equipment, the first user equipment receives the measurement stopping instruction from the base station, and stops measurement and measurement reporting. The specific process may be as follows: In the process following step S504, if the base station sends the first user equipment the instruction for stopping the measurement corresponding to a measurement ID corresponding to the sent measurement report, the first user equipment receives the instruction, for stopping the measurement corresponding to the measurement ID corresponding to the sent measurement report, from the base station, and stops the measurement corresponding to the measurement ID and measurement reporting.
Step S507: Upon receiving the second measurement configuration message of the base station, the first user equipment sends the information, which is read from a broadcast of the measured cell, corresponds to the sent PCI of the measured cell, and includes the ECGI, to the base station.
   In short, in the embodiment of the present application, the user equipment provides successively the information including the PCI of the measured cell and the information including the ECGI of the measured cell for the base station, and after the base station obtains the ECGI and the PCI, it can be determined whether a PCI confusion exists. Through the foregoing manner, a PCI confusion can be detected. When it is detected that the PCI confusion between the non-configured neighboring cell and the configured neighboring cell of the serving cell exists and/or the PCI confusion between the configured neighboring cells of the serving cell exists, the confusion may be reported to a network administrator, so that the network administrator may perform adjustment and arrangement.

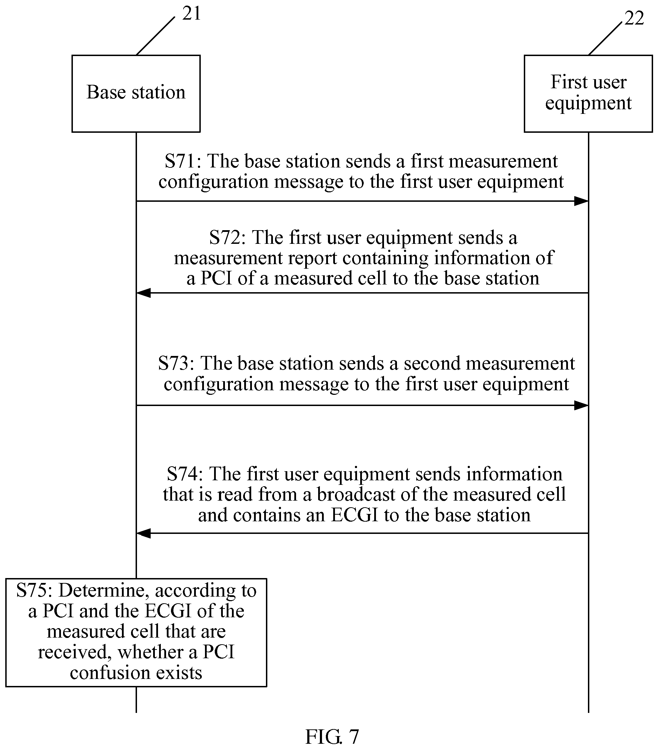

Referring to FIG. 7, FIG. 7 is a flowchart of a physical cell identity PCI confusion detection method according to another embodiment of the present application. This embodiment is a flowchart of PCI confusion detection involving a base station 21 and a user equipment 22, and the flowchart includes the following steps.
Step S71: A base station sends a first measurement configuration message to a first user equipment, where the first measurement configuration message is used to request the first user equipment to perform cell measurement and report a measurement report that is obtained through the measurement and contains information of a PCI of a measured cell.
Step S72: The first user equipment receives the first measurement configuration message from the base station, performs measurement on the cell regarding a predetermined measurement parameter, and then sends the measurement report that is obtained through the measurement and contains the information of the PCI of the measured cell to the base station.
Step S73: Upon obtaining the measurement report, containing the information of the PCI of the measured cell, from the first user equipment, the base station sends a second measurement configuration message to the first user equipment, where the second measurement configuration message is used to request the first user equipment to report information containing an ECGI of the measured cell.
Step S74: The first user equipment receives the second measurement configuration message from the base station, and sends the information that is read from a broadcast of the measured cell and contains the ECGI of the measured cell to the base station.
Step S75: The base station determines, according to the PCI and the ECGI of the measured cell, whether a PCI confusion exists; where if it is determined that the ECGI of the measured cell and an ECGI of a configured neighboring cell of the serving cell are different, and the PCI of the measured cell and a PCI of the configured neighboring cell of the serving cell are the same, a PCI confusion between the non-configured neighboring cell and the configured neighboring cell of the serving cell exists; and/or if it is determined that the ECGI of the measured cell and the ECGI of the configured neighboring cell of the serving cell are the same, and the PCI of the measured cell and a PCI of another configured neighboring cell of the serving cell are the same, a PCI confusion between the configured neighboring cells of the serving cell exists.

In the embodiment of the present application, after the base station obtains the ECGI and the PCI, it can be determined whether a PCI confusion exists. Through the foregoing manner, a PCI confusion can be detected. When it is detected that the PCI confusion between the non-configured neighboring cell and the configured neighboring cell of the serving cell exists and/or the PCI confusion between the configured neighboring cells of the serving cell exists, the confusion may be reported to a network administrator, so that the network administrator may perform adjustment and arrangement.

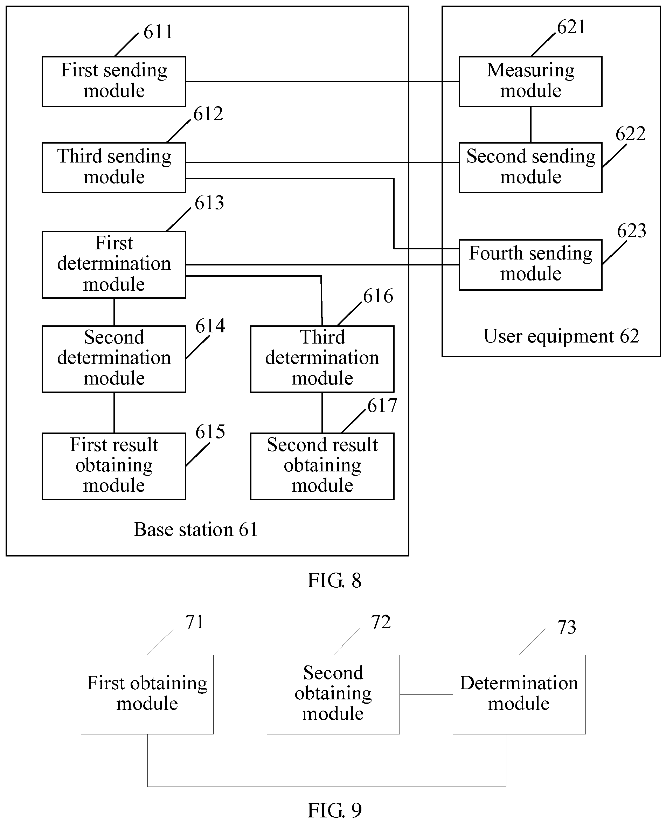

Referring to FIG. 8, FIG. 8 is a schematic structural diagram of a physical cell identity PCI confusion detection system according to an embodiment of the present application. The system includes a base station 61 and a first user equipment 62. The base station 61 includes: a first sending module 611, a third sending module 612, a first determination module 613, a second determination module 614, a first result obtaining module 615, a third determination module 616, and a second result obtaining module 617. The first user equipment 62 includes: a measuring module 621, a second sending module 622, and a fourth sending module 623.

In the base station 61, the first sending module 611 is configured to send a first measurement configuration message to the first user equipment which is selected, where the first measurement configuration message is used to request the first user equipment to measure a frequency predetermined on a network side and report a measurement report that includes information including a PCI of a measured cell.

In the first user equipment 62, the measuring module 621 is configured to, upon receiving the first measurement configuration message, measure the frequency predetermined on the network side regarding a predetermined measurement parameter, and obtain a measurement report; the second sending module 622 is configured to send the measurement report that includes the information including the PCI of the measured cell to the base station.

In the base station 61, the third sending module 612 is configured to, upon receiving the measurement report from the first user equipment, send a second measurement configuration message to the first user equipment, where the second measurement configuration message is used to request the first user equipment to report information that corresponds to the received PCI of the measured cell and includes an ECGI.

In the first user equipment 62, the fourth sending module 623 is configured to, upon receiving the second measurement configuration message of the base station, send the information, which is read from a broadcast of the measured cell, corresponds to the sent PCI of the measured cell, and includes the ECGI, to the base station.

In the base station 61, the first determination module 613 is configured to, upon receiving the information being of the measured cell of the first user equipment and including the ECGI, determine, according to the received measurement report including the PCI of the measured cell and the ECGI of the measured cell, whether the ECGI of the measured cell and an ECGI of a configured neighboring cell of the serving cell are the same; the second determination module 614 is configured to, when the ECGI of the measured cell and the ECGI of the configured neighboring cell of the serving cell are different, determine whether the PCI of the measured cell and a PCI of the configured neighboring cell of the serving cell are the same; the first result obtaining module 615 is configured to, when the PCI of the measured cell and the PCI of the configured neighboring cell of the serving cell are the same, determine that a PCI confusion between the non-configured neighboring cell and the configured neighboring cell of the serving cell exists.

The base station 61 further includes: the third determination module 616 and the second result obtaining module 617.

The third determination module 616 is configured to, when the ECGI of the measured cell and the ECGI of the configured neighboring cell of the serving cell are the same, update the PCI of the configured neighboring cell having the same ECGI as the measured cell, to update it to be the received PCI of the measured cell, where the received PCI of the measured cell and the ECGI of the configured neighboring cell of the serving cell are the same, and determine whether the updated PCI of the configured neighboring cell and PCIs of other configured neighboring cells of the serving cell are the same.

The second result obtaining module 617 is configured to, when the updated PCI of the configured neighboring cell and the PCI of another configured neighboring cell of the serving cell are the same, determine that a PCI confusion between the configured neighboring cells of the serving cell exists.

When it is detected that the PCI confusion between the non-configured neighboring cell and the configured neighboring cell of the serving cell exists and/or the PCI confusion between the configured neighboring cells of the serving cell exists, the confusion may be reported to a network administrator, so that the network administrator may perform adjustment and arrangement.

In short, in the embodiment of the present application, the base station directly requests the first user equipment to provide successively the information including the PCI of the measured cell and the information including the ECGI of the measured cell; after the base station obtains the ECGI and the PCI, when the ECGI of the measured cell and the ECGI of the configured neighboring cell of the serving cell are different, it indicates that the measured cell is a non-configured neighboring cell of the serving cell, and if in this case the PCI of the measured cell and the PCI of the configured neighboring cell of the serving cell are the same, it indicates that a PCI confusion between the non-configured neighboring cell and the configured neighboring cell of the serving cell exists. Through the foregoing manner, the PCI confusion can be detected, and the PCI confusion between a "non-configured neighboring cell" and a "configured neighboring cell" can be detected.

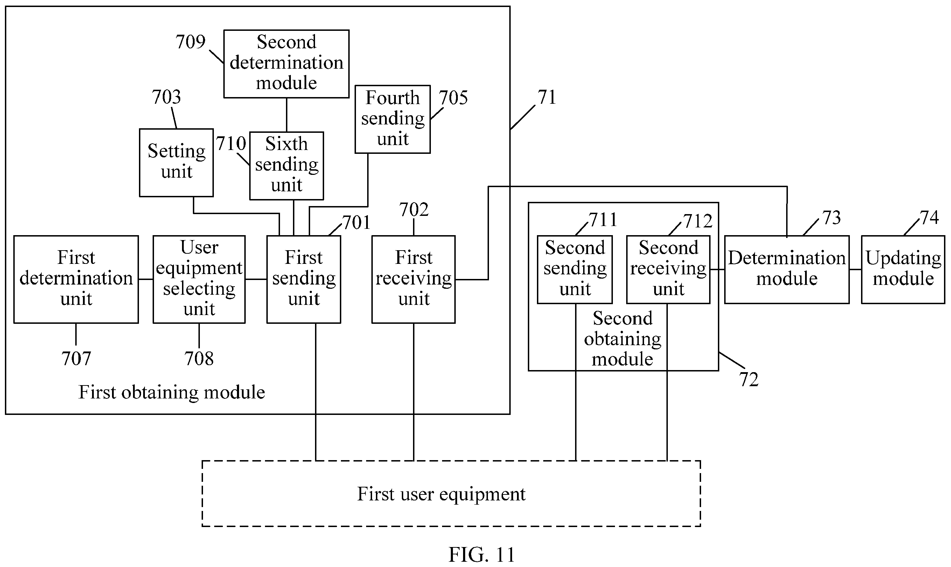

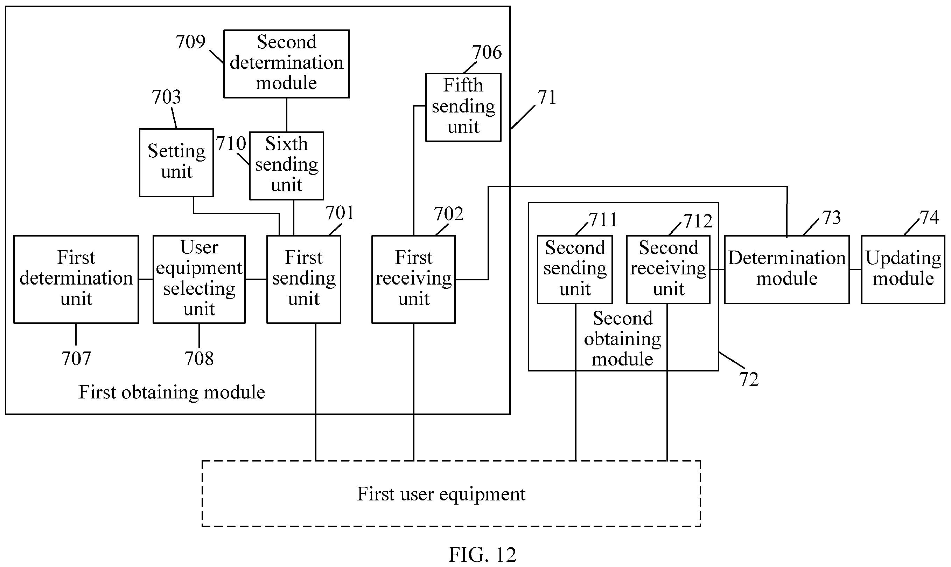

Referring to FIG. 9 to FIG. 12, FIG. 9 to FIG. 12 are schematic structural diagrams of a physical cell identity PCI confusion detection base station according to an embodiment of the present application. The base station includes: a first obtaining module 71, a second obtaining module 72, and a determination module 73.

The first obtaining module 71 is configured to obtain a measurement report, containing information of a PCI of a measured cell, from a first user equipment, where the measured cell includes at least one cell, and send the measurement report containing the information of the PCI of the measured cell to the determination module 73.

The second obtaining module 72 is configured to obtain information containing an ECGI of the measured cell from the first user equipment, and send the information containing the ECGI of the measured cell to the determination module 73.

The determination module 73 is configured to receive the measurement report sent by the first obtaining module 71 and the information that is sent by the second obtaining module 72 and contains the ECGI of the measured cell; and if it is determined that the ECGI of the measured cell and an ECGI of a configured neighboring cell of the serving cell are different, and the PCI of the measured cell and a PCI of the configured neighboring cell of the serving cell are the same, a PCI confusion between the non-configured neighboring cell and the configured neighboring cell of the serving cell exists; or, if it is determined that the ECGI of the measured cell and the ECGI of the configured neighboring cell of the serving cell are the same, and the PCI of the measured cell and a PCI of another configured neighboring cell of the serving cell are the same, it is determined that a PCI confusion between the configured neighboring cells of the serving cell exists.

When it is detected that the PCI confusion between the non-configured neighboring cell and the configured neighboring cell of the serving cell exists and/or the PCI confusion between the configured neighboring cells of the serving cell exists, the confusion may be reported to a network administrator, so that the network administrator may perform adjustment and arrangement.

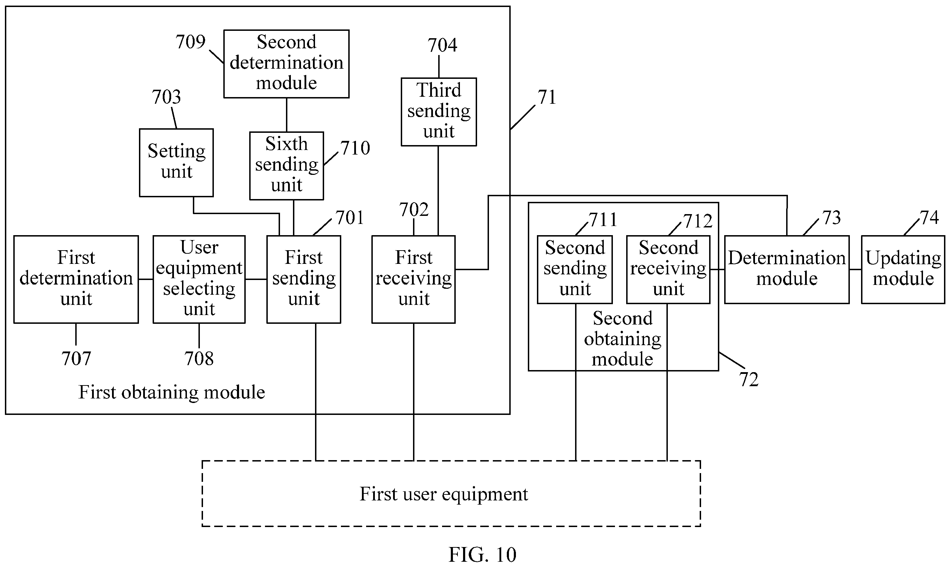

Referring to FIG. 10 to FIG. 12, the first obtaining module 71 includes: a first sending unit 701, a first receiving unit 702, a setting unit 703, or a third sending unit 704, or a fourth sending unit 705, or a fifth sending unit 706, a first determination unit 707, a user equipment selecting unit 708, a second determination module 709, and a sixth sending unit 710.

The second obtaining module 72 includes a second sending unit 711 and a second receiving unit 712.

The base station further includes an updating module 74.

The first sending unit 701 is configured to send a first measurement configuration message to the first user equipment, where the first measurement configuration message is used to request the first user equipment to perform cell measurement and report a measurement report that is obtained through the measurement and contains the information of the PCI of the measured cell.

The first measurement configuration message is used to request the first user equipment to perform cell measurement and report the measurement report that is obtained through measurement and contains information of PCIs of a predetermined number of measured cells.

And/or, the first measurement configuration message is used to request the first user equipment to perform cell measurement and report a measurement report that meets a trigger condition under which the first user equipment reports the measurement report, is obtained through measurement, and contains the information of the PCI of the measured cell.

And/or, the first measurement configuration message is used to request the first user equipment to perform cell measurement, and report the measurement report, which is obtained through measurement and contains the information of the PCI of the measured cell, according to the predetermined number of reporting times and an interval period.

The first receiving unit 702 is configured to, after the first sending unit 701 sends the first measurement configuration message to the first user equipment, receive the measurement report sent by the first user equipment, where the measurement report contains the information of the PCI of the measured cell, and send the measurement report containing the information of the PCI of the measured cell to the determination module 73.

The setting unit 703 is configured to set a trigger condition under which the first user equipment corresponding to the first measurement configuration message reports the measurement report and send the set trigger condition, under which the first user equipment reports the measurement report, to the first sending unit 701, where the trigger condition makes the first user equipment send the measurement report of the first measurement configuration message to the base station before handover.

The third sending unit 704 is configured to, after the first receiving unit 702 receives the measurement report from the first user equipment, send a measurement stopping instruction to the first user equipment.

The third sending unit 704 is specifically configured to, after the first receiving unit 702 receives the measurement report from the first user equipment, delete a measurement identifier corresponding to the measurement report, and send an instruction for stopping measurement corresponding to the measurement identifier to the first user equipment.

The fourth sending unit 705 is configured to, after the first sending unit 701 sends the first measurement configuration message to the first user equipment and if the measurement report from the first user equipment is not received within a time length of a preset measurement timer, send a measurement stopping instruction to the user equipment.

The fifth sending unit 706 is configured to, after the first receiving unit 702 receives the measurement report sent by the first user equipment and when the number of times that the base station receives the measurement report from the first user equipment reaches the predetermined number of reception times, send a measurement stopping instruction to the first user equipment.

The first determination unit 707 is configured to determine, according to a preset condition for selecting a first user equipment, whether a user equipment in the serving cell meets the condition, and send a determination result to the user equipment selecting unit 708, where the condition includes at least one of an energy level of the first user equipment, a state of the first user equipment, the predetermined number of times that the first user equipment participates in PCI confusion detection, and the predetermined number of first user equipments participating in PCI confusion detection.

The user equipment selecting unit 708 is configured to receive the determination result sent by the first determination unit 707, where when the determination result meets the condition, the user equipment in the serving cell is the selected first user equipment, and send the selected first user equipment to the first sending unit 701.

The second determination unit 709 is configured to determine, according to a preset time range condition for performing PCI confusion detection, whether current time meets the time range condition for performing PCI confusion detection, and send a determination result to the sixth sending unit 710, where the time range condition of PCI confusion detection includes at least one of a switch of PCI confusion detection, start time of PCI confusion detection or end time of PCI confusion detection.

The sixth sending unit 710 is configured to receive the determination result sent by the second determination unit 709, and when the determination result meets the time range condition for performing PCI confusion detection, send an instruction for performing PCI confusion detection to the first sending unit 701.

The second sending unit 711 is configured to, after the first obtaining module 71 obtains the measurement report, which contains the information of the PCI of the measured cell, from the first user equipment, send a second measurement configuration message to the first user equipment, where the second measurement configuration message is used to request the first user equipment to report the information containing the ECGI of the measured cell.

The second receiving unit 712 is configured to, after the second sending unit 711 sends the second measurement configuration message to the first user equipment, receive the information sent by the first user equipment and containing the ECGI of the measured cell, and send the received information containing the ECGI of the measured cell to the determination module 73.

The updating module 74 is configured to update the PCI of the configured neighboring cell, having the same ECGI as the measured cell, of the serving cell, to update it to be the PCI of the measured cell.

One of the third sending unit 704, the fourth sending unit 705, and the fifth sending unit 706 is selected, and other modules may be added or reduced according to actual needs, which is not described herein.

In short, in the embodiment of the present application, the base station directly requests the user equipment to provide successively the information including the PCI of the measured cell and the information including the ECGI of the measured cell; after the base station obtains the ECGI and the PCI, when the ECGI of the measured cell and the ECGI of the configured neighboring cell of the serving cell are different, it indicates that the measured cell is a non-configured neighboring cell of the serving cell, and if in this case the PCI of the measured cell and the PCI of the configured neighboring cell of the serving cell are the same, it indicates that a PCI confusion between the non-configured neighboring cell and the configured neighboring cell of the serving cell exists. Through the foregoing manner, the PCI confusion can be detected, and the PCI confusion between a "non-configured neighboring cell" and a "configured neighboring cell" can be detected.

Further, through a detection switch and time period control, the impact of PCI confusion detection on a network can be reduced; targeted selection of a user equipment performing PCI confusion detection may reduce occupation of resources by the PCI confusion detection and an impact on the network; by setting the trigger condition under which the user equipment corresponding to the first measurement configuration message used for the PCI confusion detection reports the measurement report, the PCI confusion can be found and solved before handover; the measurement action of the user equipment is controlled, so as to reduce waste of resources.

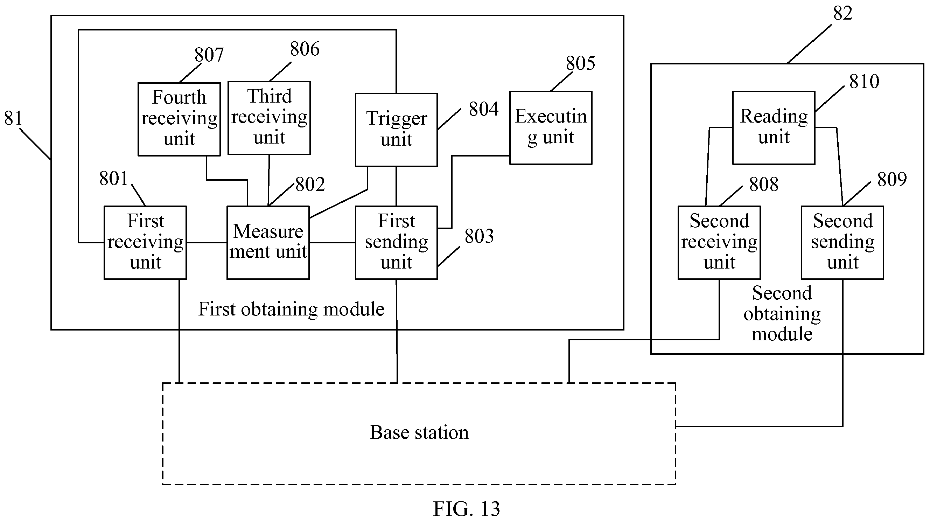

Referring to FIG. 13, FIG. 13 is a schematic structural diagram of a physical cell identity PCI confusion detection user equipment according to an embodiment of the present application. The user equipment includes a first obtaining module 81 and a second obtaining module 82.

The first obtaining module 81 is configured to obtain a measurement report containing information of a PCI of a measured cell, and send the measurement report to a base station, where the measured cell includes at least one cell.

The second obtaining module 82 is configured to, after the first obtaining module 81 sends the measurement report to the base station, obtain information containing an ECGI of the measured cell, and send the information containing the ECGI of the measured cell to the base station.

The first obtaining module 81 includes: a first receiving unit 801, a measurement unit 802, a first sending unit 803, a trigger unit 804, an executing unit 805, a third receiving unit 806, and a fourth receiving unit 807.

The second obtaining module 82 includes a second receiving unit 808, a reading unit 810, and a second sending unit 809.

The first receiving unit 801 is configured to receive a first measurement configuration message from the base station, and send the received first measurement configuration message to the measurement unit 802 or a related unit (for example, the trigger unit 804), where the first measurement configuration message is used to request the first user equipment to perform cell measurement and report the measurement report that is obtained through the measurement and contains the information of the PCI of the measured cell, and the measured cell includes at least one cell.

The first measurement configuration message is used to request the first user equipment to perform cell measurement and report the measurement report that is obtained through measurement and contains information of PCIs of a predetermined number of measured cells.

And/or, the first measurement configuration message is used to request the first user equipment to perform cell measurement and report a measurement report that meets a trigger condition under which the first user equipment reports the measurement report, is obtained through measurement, and contains the information of the PCI of the measured cell.

And/or, the first measurement configuration message is used to request the first user equipment to perform cell measurement, and report the measurement report, which is obtained through measurement and contains the information of the PCI of the measured cell, according to the predetermined number of reporting times and an interval period.

The measurement unit 802 is configured to, upon receiving the first measurement configuration message sent by the first receiving unit 801, perform measurement on the cell regarding a predetermined measurement parameter, and send the measurement report that is obtained through the measurement and contains the information of the PCI of the measured cell to the first sending unit 803 or a related unit (for example, the trigger unit 804).

The first sending unit 803 is configured to receive the measurement report sent by the measurement unit 802 and containing the information of the PCI of the measured cell, and send the measurement report that is obtained through the measurement and contains the information of the PCI of the measured cell to the base station.

The trigger unit 804 is configured to receive the first measurement configuration message sent by the first receiving unit 801 and measurement information sent by the measurement unit 802, and when the measurement information obtained by the measurement unit 802 through the measurement meets the trigger condition under which the first user equipment reports the measurement report, trigger the first sending unit 803 to send the obtained measurement report.

The executing unit 805 is configured to receive the first measurement configuration message sent by the first receiving unit 801, and after the first sending unit 803 sends the measurement report that is obtained through the measurement and contains the information of the PCI of the measured cell to the base station, and when the number of reporting times of the measurement report does not reach the predetermined number of reporting times, according to the received interval period that the user equipment reports the measurement report, send the measurement report to the base station again, and when the number of reporting times of the measurement report reaches the predetermined number of reporting times, stop sending the measurement report to the base station.

The third receiving unit 806 is configured to, after the first sending unit 803 sends the measurement report that is obtained through the measurement and contains the information of the PCI of the measured cell to the base station, receive a measurement stopping instruction from the base station and stop the measurement.

The third receiving unit 806 is specifically configured to, after the first sending unit 803 sends the measurement report that is obtained through the measurement and contains the information of the PCI of the measured cell to the base station, receive an instruction, for stopping measurement corresponding to a measurement ID corresponding to the sent measurement report, from the base station, and stop the measurement corresponding to the measurement ID.

The fourth receiving unit 807 is configured to, when the measurement unit 802 performs the measurement on the cell regarding the predetermined measurement parameter, receive the measurement stopping instruction from the base station, and stop the measurement.

The second receiving unit 808 is configured to, after the first obtaining module 81 sends the measurement report that is obtained through the measurement and contains the information of the PCI of the measured cell to the base station, receive a second measurement configuration message from the base station, and send the received second measurement configuration message to the reading unit 810, where the second measurement configuration message is used to request the first user equipment to report information containing an ECGI of the measured cell.

The reading unit 810 is configured to receive the second measurement configuration message sent by the second receiving unit 808, read the information, containing the ECGI of the measured cell, from a broadcast of the measured cell according to the second measurement configuration message, and send the information containing the ECGI of the measured cell to the second sending unit 809.

The second sending unit 809 is configured to receive the information sent by the reading unit 810 and containing the ECGI of the measured cell, and send the information containing the ECGI of the measured cell to the base station.

Modules or units of this embodiment may be increased or decreased according to actual situations, which is not described herein.

In short, in the embodiment of the present application, the first user equipment provides successively the information including the PCI of the measured cell and the information including the ECGI of the measured cell for the base station, and after the base station obtains the ECGI and the PCI, it can be determined whether a PCI confusion exists. Through the foregoing manner, a PCI confusion can be detected.

## Claims

1. A physical cell identity, PCI, confusion detection method performed by a base station of a serving cell, comprising:
determining (S401a) according to a preset time range condition for performing PCI confusion detection, whether the current time meets the time range condition for performing PCI confusion detection, wherein the time range condition of PCI confusion detection comprises at least one of a switch of PCI confusion detection, start time of PCI confusion detection or end time of PCI confusion detection; and
if the time range condition for performing PCI confusion detection is met, sending (S401b) an instruction, wherein the instruction requests a first measurement configuration message to be sent to a first user equipment;
sending (S404) the first measurement configuration message to the first user equipment, wherein the first measurement configuration message is used to request the first user equipment to perform cell measurement and report a measurement report that is obtained through the measurement and contains information of the PCI of at least one measured cell; receiving (S407) the measurement report from the first user equipment,
upon receiving the measurement report, or if the number of times that the base station receives the measurement report from the first user equipment reaches the predetermined number of reception times, or, if no measurement report from the first user equipment is received within a time length of a preset measurement timer sending (S408) a measurement stopping instruction to the first user equipment;
upon receiving the measurement report, sending (S409) a second measurement configuration message to the first user equipment, wherein the second measurement configuration message is used to request the first user equipment to report information containing the evolved universal terrestrial radio access network cell global identifier, ECGI of the measured cell; and
receiving (S410) the information containing the ECGI of the measured cell, from the first user equipment;
detecting (S413) that a PCI confusion between the measured cell and a configured neighboring cell of the serving cell exists if it is determined (S411, S412) that the ECGI of the measured cell and an ECGI of the configured neighboring cell of the serving cell are different, and the PCI of the measured cell and a PCI of the configured neighboring cell of the serving cell are the same.

2. A physical cell identity, PCI, confusion detection base station, wherein the base station comprises a first obtaining module (71) with a first sending unit (701) and second sending unit and a third sending unit and a first receiving unit (702) and a second receiving unit and a second determination unit ( 709 ) and a sixth sending unit ( 710 ), the base station further comprising a second obtaining module ( 72 ), and a determination module ( 73 );
wherein the second determination unit ( 709 ) is configured to determine, according to a preset time range condition for performing PCI confusion detection, whether the current time meets the time range condition for performing PCI confusion detection, wherein the time range condition of PCI confusion detection comprises at least one of a switch of PCI confusion detection, start time of PCI confusion detection or end time of PCI confusion detection; and
the sixth sending unit ( 710 ) is configured to receive the determination result sent by the second determination unit ( 709 ), and when the determination result meets the time range condition for performing PCI confusion detection, send an instruction for performing PCI confusion detection to the first sending unit ( 701 ), wherein the instruction requests a first measurement configuration message to be sent to a first user equipment;
wherein the first sending unit ( 701 ) is configured to send the first measurement configuration message to the first user equipment, wherein the first measurement configuration message is used to request the first user equipment to perform cell measurement and report a measurement report that is obtained through the measurement and contains the information of the PCI of at least one measured cell;
wherein the first receiving unit ( 702 ) is configured to receive a measurement report sent by the first user equipment after the first sending unit sends the first measurement configuration message to the first user equipment, and send the measurement report to the determination module,
wherein the first obtaining module ( 71 ) is configured to receive the measurement report from the first receiving unit ( 702 ), and send the measurement report containing the information of the PCI of the measured cell to the determination module;
wherein the third sending unit is configured to, after the first receiving unit receives the measurement report, or if the number of times that the base station receives the measurement report from the first user equipment reaches the predetermined number of reception times, or, if no measurement report from the first user equipment is received within a time length of a preset measurement timer, send a measurement stopping instruction to the first user equipment;
wherein the second sending unit is configured to, after the first obtaining module receives the measurement report, send a second measurement configuration message to the first user equipment, wherein the second measurement configuration message is used to request the first user equipment to report information containing the evolved universal terrestrial radio access network cell global identifier, ECGI, of the measured cell; and
wherein the second receiving unit is configured to, after the second sending unit sends the second measurement configuration message to the first user equipment, receive the information containing the ECGI of the measured cell, and send the received information containing the ECGI of the measured cell to the determination module;
wherein the second obtaining module ( 72 ) is configured to receive the information containing the ECGI of the measured cell, from the first user equipment, and send the information containing the ECGI of the measured cell to the determination module; and
wherein the determination module ( 73 ) is configured to receive the information from the second obtaining module, and if it is determined that the ECGI of the measured cell and an ECGI of a configured neighboring cell of the serving cell are different, and the PCI of the measured cell and a PCI of the configured neighboring cell of the serving cell are the same, detect that a PCI confusion between the measured cell and a configured neighboring cell of the serving cell exists.

## Patentansprüche

1. Konfusionsdetektionsverfahren für physische Zellidentitäten (PCI-Konfusionsdetektionsverfahren), das von einer Basisstation einer versorgenden Zelle durchgeführt wird und Folgendes umfasst:
Bestimmen (S401a) gemäß einer voreingestellten Zeitbereichsbedingung zum Durchführen einer PCI-Konfusionsdetektion, ob die aktuelle Zeit die Zeitbereichsbedingung zum Durchführen einer PCI-Konfusionsdetektion erfüllt, wobei die Zeitbereichsbedingung der PCI-Konfusionsdetektion einen Schalter der PCI-Konfusionsdetektion, eine Startzeit der PCI-Konfusionsdetektion und/oder eine Endzeit der PCI-Konfusionsdetektion umfasst; und
dann, wenn die Zeitbereichsbedingung zum Durchführen einer PCI-Konfusionsdetektion erfüllt ist, Senden (S401b) eines Befehls, wobei der Befehl eine erste Messkonfigurationsnachricht anfordert, die an ein erstes Anwendergerät gesendet werden soll;
Senden (S404) der ersten Messkonfigurationsnachricht an das erste Anwendergerät, wobei die erste Messkonfigurationsnachricht verwendet wird, um anzufordern, dass das erste Anwendergerät eine Zellmessung durchführt und einen Messbericht meldet, der durch die Messung erhalten wird und Informationen über die PCI mindestens einer gemessenen Zelle enthält;
Empfangen (S407) des Messberichts von dem ersten Anwendergerät, nach Erhalt des Messberichts oder dann, wenn die Anzahl von Malen, die die Basisstation den Messbericht von dem ersten Anwendergerät empfängt, die vorbestimmte Anzahl an Empfangsvorgängen erreicht, oder dann, wenn innerhalb einer Zeitdauer eines voreingestellten Messzeitgebers kein Messbericht von dem ersten Anwendergerät empfangen wird, Senden (S408) eines Messstoppbefehls an das erste Anwendergerät;
nach Erhalt des Messberichts, Senden (S409) einer zweiten Messkonfigurationsnachricht an das erste Anwendergerät, wobei die zweite Messkonfigurationsnachricht verwendet wird, um anzufordern, dass das erste Anwendergerät Informationen meldet, die die globale Zellkennung im entwickelten universellen terrestrischen Funkzugangsnetz (ECGI) der gemessenen Zelle enthalten; und
Empfangen (S410) der Informationen, die die ECGI der gemessenen Zelle enthalten, von dem ersten Anwendergerät;
Detektieren (S413), dass eine PCI-Konfusion zwischen der gemessenen Zelle und einer konfigurierten benachbarten Zelle der versorgenden Zelle existiert, wenn bestimmt wird (S411, S412), dass die ECGI der gemessenen Zelle und eine ECGI der konfigurierten benachbarten Zelle der versorgenden Zelle verschieden sind und die PCI der gemessenen Zelle und eine PCI der konfigurierten benachbarten Zelle der versorgenden Zelle gleich sind.

2. Basisstation zur Konfusionsdetektion für physische Zellidentitäten (PCI-Konfusionsdetektions-Basisstation), wobei die Basisstation ein erstes Erhaltungsmodul (71) mit einer ersten Sendeeinheit (701) und einer zweiten Sendeeinheit und einer dritten Sendeeinheit und einer ersten Empfangseinheit (702) und einer zweiten Empfangseinheit und einer zweiten Bestimmungseinheit (709) und einer sechsten Sendeeinheit (710) umfasst, wobei die Basisstation ferner ein zweites Erhaltungsmodul (72) und ein Bestimmungsmodul (73) umfasst;
wobei die zweite Bestimmungseinheit (709) dazu ausgelegt ist, gemäß einer voreingestellten Zeitbereichsbedingung zum Durchführen einer PCI-Konfusionsdetektion zu bestimmen, ob die aktuelle Zeit die Zeitbereichsbedingung zum Durchführen einer PCI-Konfusionsdetektion erfüllt, wobei die Zeitbereichsbedingung der PCI-Konfusionsdetektion einen Schalter der PCI-Konfusionsdetektion, eine Startzeit der PCI-Konfusionsdetektion und/oder eine Endzeit der PCI-Konfusionsdetektion umfasst; und
die sechste Sendeeinheit (710) dazu ausgelegt ist, das von der zweiten Bestimmungseinheit (709) gesendete Bestimmungsergebnis zu empfangen und dann, wenn das Bestimmungsergebnis die Zeitbereichsbedingung zum Durchführen einer PCI-Konfusionsdetektion erfüllt, einen Befehl zum Durchführen einer PCI-Konfusionsdetektion an die erste Sendeeinheit (701) zu senden, wobei der Befehl eine erste Messkonfigurationsnachricht anfordert, die an ein erstes Anwendergerät gesendet werden soll;
wobei die erste Sendeeinheit (701) dazu ausgelegt ist, die erste Messkonfigurationsnachricht an das erste Anwendergerät zu senden, wobei die erste Messkonfigurationsnachricht verwendet wird, um anzufordern, dass das erste Anwendergerät eine Zellmessung durchführt und einen Messbericht meldet, der durch die Messung erhalten wird und die Informationen über die PCI mindestens einer gemessenen Zelle enthält;
wobei die erste Empfangseinheit (702) dazu ausgelegt ist, einen von dem ersten Anwendergerät gesendeten Messbericht zu empfangen, nachdem die erste Sendeeinheit die erste Messkonfigurationsnachricht an das erste Anwendergerät gesendet hat, und den Messbericht an das Bestimmungsmodul zu senden; wobei das erste Erhaltungsmodul (71) dazu ausgelegt ist, den Messbericht von der ersten Empfangseinheit (702) zu empfangen und den Messbericht, der die Informationen über die PCI der gemessenen Zelle enthält, an das Bestimmungsmodul zu senden;
wobei die dritte Sendeeinheit dazu ausgelegt ist, nachdem die erste Empfangseinheit den Messbericht empfangen hat, oder dann, wenn die Anzahl von Malen, die die Basisstation den Messbericht von dem ersten Anwendergerät empfängt, die vorbestimmte Anzahl an Empfangsvorgängen erreicht, oder dann, wenn innerhalb einer Zeitdauer eines voreingestellten Messzeitgebers kein Messbericht von dem ersten Anwendergerät empfangen wird, einen Messstoppbefehl an das erste Anwendergerät zu senden;
wobei die zweite Sendeeinheit dazu ausgelegt ist, nachdem das erste Erhaltungsmodul den Messbericht empfangen hat, eine zweite Messkonfigurationsnachricht an das erste Anwendergerät zu senden, wobei die zweite Messkonfigurationsnachricht verwendet wird, um anzufordern, dass das erste Anwendergerät Informationen meldet, die die globale Zellkennung im entwickelten universellen terrestrischen Funkzugangsnetz (ECGI) der gemessenen Zelle enthalten; und
wobei die zweite Empfangseinheit dazu ausgelegt ist, nachdem die zweite Sendeeinheit die zweite Messkonfigurationsnachricht an das erste Anwendergerät gesendet hat, die Informationen, die die ECGI der gemessenen Zelle enthalten, zu empfangen und die empfangenen Informationen, die die ECGI der gemessenen Zelle enthalten, an das Bestimmungsmodul zu senden;
wobei das zweite Erhaltungsmodul (72) dazu ausgelegt ist, die Informationen, die die ECGI der gemessenen Zelle enthalten, von dem ersten Anwendergerät zu empfangen und die Informationen, die die ECGI der gemessenen Zelle enthalten, an das Bestimmungsmodul zu senden; und
wobei das Bestimmungsmodul (73) dazu ausgelegt ist, die Informationen von dem zweiten Erhaltungsmodul zu empfangen, und dann, wenn bestimmt wird, dass die ECGI der gemessenen Zelle und eine ECGI einer konfigurierten benachbarten Zelle der versorgenden Zelle unterschiedlich sind und die PCI der gemessenen Zelle und eine PCI der konfigurierten benachbarten Zelle der versorgenden Zelle gleich sind, zu detektieren, dass eine PCI-Konfusion zwischen der gemessenen Zelle und einer konfigurierten benachbarten Zelle der versorgenden Zelle existiert.

## Revendications

1. Procédé de détection de confusion d'identité de cellule physique (PCI) réalisé par une station de base d'une cellule de desserte, consistant à :
déterminer (S401a), en fonction d'une condition de plage temporelle prédéterminée pour réaliser une détection de confusion d'identité PCI, si l'heure actuelle répond à la condition de plage temporelle pour réaliser une détection de confusion d'identité PCI, dans lequel la condition de plage temporelle d'une détection de confusion d'identité PCI comprend un changement de détection de confusion d'identité PCI et/ou une heure de début de détection de confusion d'identité PCI et/ou une heure de fin de détection de confusion d'identité PCI ; et
si la condition de plage temporelle pour réaliser une détection de confusion d'identité PCI est satisfaite, envoyer (S401b) une instruction, dans lequel l'instruction demande qu'un premier message de configuration de mesure soit envoyé à un premier équipement utilisateur ;
envoyer (S404) le premier message de configuration de mesure au premier équipement utilisateur, dans lequel le premier message de configuration de mesure est utilisé pour demander au premier équipement utilisateur de réaliser une mesure de cellule et de rendre compte d'un rapport de mesure qui est obtenu grâce à la mesure et contient des informations de l'identité PCI d'au moins une cellule mesurée ;
recevoir (S407) le rapport de mesure du premier équipement utilisateur, lors de la réception du rapport de mesure, ou si le nombre de fois que la station de base reçoit le rapport de mesure du premier équipement utilisateur, atteint le nombre prédéterminé d'heures de réception ou si aucun rapport de mesure provenant du premier équipement utilisateur n'est reçu pendant une période de temps d'un temporisateur de mesure prédéterminé, envoyer (S408) une instruction d'arrêt de mesure au premier équipement utilisateur ;
lors de la réception du rapport de mesure, envoyer (S409) un second message de configuration de mesure au premier équipement utilisateur, dans lequel le second message de configuration de mesure est utilisé pour demander au premier équipement utilisateur de rendre compte d'informations contenant l'identifiant global de cellule de réseau d'accès radio terrestre universel évolué (ECGI) de la cellule mesurée ; et
recevoir (S410) les informations contenant l'identifiant ECGI de la cellule mesurée en provenance du premier équipement utilisateur ;
détecter (S413) qu'une confusion d'identité PCI entre la cellule mesurée et une cellule voisine configurée de la cellule de desserte existe s'il est déterminé (S411, S412) que l'identifiant ECGI de la cellule mesurée et un identifiant ECGI de la cellule voisine configurée de la cellule de desserte sont différents et que l'identité PCI de la cellule mesurée et une identité PCI de la cellule voisine configurée de la cellule de desserte sont les mêmes.

2. Station de base de détection de confusion d'identité de cellule physique (PCI), dans laquelle la station de base comprend un premier module d'obtention (71) ayant une première unité d'envoi (701) et une deuxième unité d'envoi ainsi qu'une troisième unité d'envoi et une première unité de réception (702) ainsi qu'une deuxième unité de réception et une seconde unité de détermination (709) et une sixième unité de réception (710), la station de base comprenant en outre un second module d'obtention (72) et un module de détermination (73) ;
dans laquelle la seconde unité de détermination (709) est configurée pour déterminer, en fonction d'une condition de plage temporelle prédéterminée pour réaliser une détection de confusion d'identité PCI, si l'heure actuelle répond à la condition de plage temporelle pour réaliser une détection de confusion d'identité PCI, dans laquelle la condition de plage temporelle d'une détection de confusion d'identité PCI comprend un changement de détection de confusion d'identité PCI et/ou une heure de début de détection de confusion d'identité PCI et/ou une heure de fin de détection de confusion d'identité PCI ; et
la sixième unité d'envoi (710) est configurée pour recevoir le résultat de détermination envoyé par la seconde unité de détermination (709) et, lorsque le résultat de détermination répond à la condition de plage temporelle pour réaliser une détection de confusion d'identité PCI, envoyer une instruction pour réaliser une détection de confusion d'identité PCI à la première unité d'envoi (701), dans laquelle l'instruction demande qu'un premier message de configuration de mesure soit envoyé à un premier équipement utilisateur ;
dans laquelle la première unité d'envoi (701) est configurée pour envoyer le premier message de configuration de mesure au premier équipement utilisateur, dans laquelle le premier message de configuration de mesure est utilisé pour demander au premier équipement utilisateur de réaliser une mesure de cellule et de rendre compte d'un rapport de mesure qui est obtenu grâce à la mesure et contient les informations de l'identité PCI d'au moins une cellule mesurée ;
dans laquelle la première unité de réception (702) est configurée pour recevoir un rapport de mesure envoyé par le premier équipement utilisateur après que la première unité d'envoi envoie le premier message de configuration de mesure au premier équipement utilisateur, et envoyer le rapport de mesure au module de détermination, dans laquelle le premier module d'obtention (71) est configuré pour recevoir le rapport de mesure de la première unité de réception (702) et envoyer le rapport de mesure contenant les informations de l'identité PCI de la cellule mesurée au module de détermination ;
dans laquelle la troisième unité d'envoi est configurée, après que la première unité de réception reçoit le rapport de mesure, ou si le nombre de fois que la station de base reçoit le rapport de mesure du premier équipement utilisateur atteint le nombre prédéterminé d'heures de réception ou si aucun rapport de mesure provenant du premier équipement utilisateur n'est reçu pendant une période de temps d'un temporisateur de mesure prédéterminé, pour envoyer une instruction d'arrêt de mesure au premier équipement utilisateur ;
dans laquelle la deuxième unité de réception est configurée, après que le premier module d'obtention reçoit le rapport de mesure, pour envoyer un second message de configuration de mesure au premier équipement utilisateur, dans laquelle le second message de configuration de mesure est utilisé pour demander au premier équipement utilisateur de rendre compte d'informations contenant l'identifiant global de cellule de réseau d'accès radio terrestre universel évolué (ECGI) de la cellule mesurée ; et
dans laquelle la seconde unité de réception est configurée, après que la deuxième unité d'envoi envoie le second message de configuration de mesure au premier équipement utilisateur, pour recevoir les informations contenant l'identifiant ECGI de la cellule mesurée et envoyer les informations reçues contenant l'identifiant ECGI de la cellule mesurée au module de détermination ;
dans laquelle le second module d'obtention (72) est configuré pour recevoir les informations contenant l'identifiant ECGI de la cellule mesurée en provenance du premier équipement utilisateur et envoyer les informations contenant l'identifiant ECGI de la cellule mesurée au module de détermination ; et
dans laquelle le module de détermination (73) est configuré pour recevoir les informations en provenance du second module d'obtention et, s'il est déterminé que l'identifiant ECGI de la cellule mesurée et un identifiant ECGI d'une cellule voisine configurée de la cellule de desserte sont différents et que l'identité PCI de la cellule mesurée et une identité PCI de la cellule voisine configurée de la cellule de desserte sont les mêmes, détecter qu'une confusion d'identité PCI entre la cellule mesurée et une cellule voisine configurée de la cellule de desserte existe.
